# EUROPEAN PATENT APPLICATION

(11) **EP 3 669 646 A1**
(43) Date of publication of application: **24.06.2020**
(21) Application number: 18213998.0
(22) Date of filing: 19.12.2018
(51) Int. Cl.: A01K 63/04, C02F 3/12

(54) **FISH FARMING TANK FOR CULTIVATING LIVING FISH**

(71) Applicant: Alfa Laval Corporate AB, 221 00 Lund (SE)
(72) Inventor: MILOVANOVIC, Milan, 5305 Florvåg, Bergen (NO)
(74) Representative: Alfa Laval Attorneys

(57) **Abstract**

The present disclosure relates to a fish farming tank for cultivating living fish, wherein the tank (1) comprises an active flow control system for generating a circulating flow of water within the tank (1). The tank (1) has an elongated stadium shape with an elongated partition (27) located centrally along a longitudinal direction (28) of the tank (1), as seen from above, such that a continuous tank channel (30) with first and second parallel longitudinal channel sections (31, 32) and first and second curved end sections (33, 34) is provided within the tank (1). The active flow control system has a first and a second water inlet arrangement (5a, 5b) for injecting water into the tank (1) and a first water outlet arrangement (6a) for removing water from the tank (1). The first water inlet arrangement (5a) is located at a first longitudinal end region (47) of the partition (27) and configured for injecting water into the first longitudinal channel section (31), and the second water inlet arrangement (5b) is located at a second longitudinal end region (48) of the partition (27) and configured for injecting water into the second longitudinal channel section (32). The present disclosure also relates to a corresponding method for generating a circulating flow of water in a fish farming tank for cultivating living fish.

## Description

### TECHNICAL FIELD

The disclosure relates to fish farming tanks for cultivating living fish, also known as aquafarming or pisciculture. The disclosure also relates to a method for generating a circulating flow of water in a fish farming tank for cultivating living fish.

### BACKGROUND ART

In the field of fish farming tanks for cultivating living fish, in particular stadium-shaped fish farming tanks with a central elongated partition and curved end sections, there is a continuous demand for increasing the quality and productivity of fish farming. Several aspects are relevant for accomplishing these targets, such as amount of fish compared with amount of water, water quality, nutrition availability, water oxygen level, water flow, etc. The design of the tank itself may influence and improve some of the above-identified quality aspects. The tank may for example assist in maintaining a high water quality, the correct water oxygen level and a desired water flow.

However, despite the activities in the field, there is still room for improvements in terms of tank design and method for generating a desirable water flow circulation in the tank.

### SUMMARY OF THE DISCLOSURE

This section provides a general summary of the disclosure, and is not a comprehensive disclosure of its full scope or all of its features.

The invention is based on the understanding that poor water quality regions of the tank may for example ensue in regions with still standing water or stationary whirling water, because these type of regions typically does not receive oxygen and nutrition added to the tank, and refuse substances may accumulate and being poorly removed.

Consequently, a general object of the present disclosure is to provide a tank design and method for generating a circulating flow of water in the tank having an elongated stadium shape with an elongated partition located centrally along a longitudinal direction of the tank that enables increased quality and productivity of fish farming. In particular, an object of the present disclosure is to provide a tank design and method for generating a more uniform, homogeneous and laminar circulating flow of water in the entire volume of the tank.

This and other objects, which will become apparent in the following, are accomplished by a fish farming tank design and a method for generating a circulating flow of water in a fish farming tank as defined in the accompanying independent claims.

According to a first aspect of the present disclosure, there is provided a fish farming tank for cultivating living fish. The tank comprises an active flow control system for generating a circulating flow of water within the tank. Moreover, the tank has an elongated stadium shape with an elongated partition located centrally along a longitudinal direction of the tank, as seen from above, such that a continuous tank channel with first and second parallel longitudinal channel sections and first and second curved end sections is provided within the tank. The active flow control system has a first and a second water inlet arrangement for injecting water into the tank and a first water outlet arrangement for removing water from the tank. In addition, the first water inlet arrangement is located at a first longitudinal end region of the partition and configured for injecting water into the first longitudinal channel section, and the second water inlet arrangement is located at a second longitudinal end region of the partition and configured for injecting water into the second longitudinal channel section.

According to a second aspect of the present disclosure, there is provided a fish farming tank for cultivating living fish, wherein the tank comprises a bottom and a side wall defining an internal volume for holding water, water within the internal volume filled up to a water fill level, and an active flow control system for generating a circulating flow of water within the tank. Moreover, the tank has an elongated stadium form with an elongated partition located centrally along a longitudinal direction of the tank, as seen from above, such that a continuous tank channel with first and second parallel longitudinal channel sections and first and second curved end sections is provided within the tank. The active flow control system has a first and a second water inlet arrangement for injecting water into the tank and a first water outlet arrangement for removing water from the tank, and the first water inlet arrangement is located at a first longitudinal end region of the partition and configured for injecting water into the first longitudinal channel section, and the second water inlet arrangement is located at a second longitudinal end region of the partition and configured for injecting water into the second longitudinal channel section. Each of the first and second water inlet arrangements is configured for injecting water over more than 50%, specifically over more than 70%, and more specifically over more than 80%, of a water depth stretching from an interior surface of the bottom to the water fill level.

According to a third aspect of the present disclosure, there is provided a method for generating a circulating flow of water in a fish farming tank for cultivating living fish. The method comprising: providing a tank having an elongated stadium form with an elongated partition located centrally along a longitudinal direction of the tank, as seen from above, defining a continuous tank channel with first and second parallel longitudinal channel sections and first and second curved end sections within the tank, providing an active flow control system having first and second water inlet arrangements for injecting water into the tank and first water outlet arrangement for removing water from the tank, wherein the first water inlet arrangement is located at a first longitudinal end region of the partition and wherein the second water inlet arrangement is located at a second longitudinal end region of the partition, filling the tank with water up to a water fill level, and operating the active flow control system for generating a circulating flow of water within the continuous tank channel involving injecting water into the first longitudinal channel section by means of the first water inlet arrangements and injecting water into the second longitudinal channel section by means of the second water inlet arrangement.

As a result of the specific arrangement of the active flow control system defined above, a more homogeneous and laminar circulating flow of water in at least a radial direction of the stadium shaped tank is accomplished, which circulating flow efficiently avoids occurrence of still standing water regions. Specifically, by having first water inlet arrangement located at a first longitudinal end region of the partition and configured for injecting water into the first longitudinal channel section and the second water inlet arrangement is located at a second longitudinal end region of the partition and configured for injecting water into the second longitudinal channel section, flow separation in the first and second curved end sections and following turbulent area may be avoided or at least reduced, such that the desired improvement in terms of homogeneous and laminar circulating flow of water in the whole volume of the stadium-shaped tank is at least partly accomplished.

Thereby, an improved circulating flow of water within the tank for the purpose of ensuring good and equal water quality throughout the whole water volume of the tank is accomplished, and by removing regions with poor and/or uneven water flow circulation, the whole volume of the tank can be better utilised. As a result, a higher water quality can be uniformly achieved throughout the whole water volume, such that an overall better cost-efficiency of the fish farming activity may be accomplished.

A further advantage of having an improved circulation of water and a more laminar water flow within the whole water volume of the tank is that the fish population within the tank is generally more physically active due to less possibility of resting in a calm area without flow, and said increased level of physical activity typically has a positive effect on fish health and quality.

Further advantages are achieved by implementing one or several of the features of the dependent claims.

In one example embodiment, the tank comprises a bottom and a side wall defining an internal volume for holding water up to a maximal water fill level, and each of the first and second water inlet arrangements is configured for injecting water over more than 50%, specifically over more than 70%, and more specifically over more than 80%, of a maximal depth stretching from an interior surface of the bottom to the maximal water fill level.

A more homogeneous and laminar circulating flow of water also in the vertical direction of the tank efficiently avoids occurrence of still standing water regions, and by having the first water inlet arrangement configured for injecting water over more than 50% of said maximal depth, the desired improvement in terms of homogeneous and laminar circulating flow of water in the whole volume of the tank is at least partly accomplished.

In particular, by injecting water over a significant span in the vertical direction of the tank less vertical water flow within the tank is accomplished, thereby contributing to the improved homogenous and laminar flow throughout the entire tank. Moreover, a circulating water flow with a more equal flow velocity throughout the tank contributes to a reduced risk for flow separation within the tank, wherein flow separation typically results in turbulence and whirl in the area after the location of the flow separation.

The desired improved homogenous and laminar flow throughout the entire tank means a more equal flow rate and flow direction over the vertical length of the tank, at any horizontal position of the tank. Furthermore, said improved homogenous and laminar flow throughout the entire tank may additionally mean a more equal flow rate and flow direction over a radial length of the tank, at any given depth of the tank.

In a further example embodiment, each of the first and second water inlet arrangements has one elongated inlet opening or a plurality of inlet openings for injecting water into the tank. Thereby water injection may be more distributed and performed over a larger surface area, such that a more homogenous and laminar flow of water may be accomplished within the tank.

In still a further example embodiment, the one or plurality of inlet openings of each of the first and second water inlet arrangements define an outer border of a water inlet region, and the water inlet region extends in a vertical direction over more than 50%, specifically 65%, and more specifically 80% of the maximal depth. It is thus the one or more inlet openings that define the area of injected water, and increased vertical span of injected water into the tank generally leads to a more homogenous and laminar circulating flow of water within the tank, because velocity of water injection goes down with increased injection hole area assuming constant mass flow. That will locally effect the flow in the way of vortex reduction and more efficient energy transfer. By reduction of vortex generation close to the inlet zone, it is reduced probability that this vortex will be transported downstream and create uneven velocity profile throughout the whole tank volume.

In yet a further example embodiment, said outer border of said water inlet region is defined only by those inlet openings of the first and second water inlet arrangements, respectively, that forms a cluster having a vertical distance between neighbouring inlet openings of the first or second water inlet arrangements smaller than 3 metres or 40% of the maximal depth, specifically smaller than 1.5 metres or 25% of the maximal depth, and more specifically smaller than 0.5 metre or 10% of the maximal depth, and a horizontal distance between neighbouring inlet openings (57) of the first or second water inlet arrangements smaller than 10 metres or 75% of a maximal interior horizontal length of the tank, specifically smaller than 5 metres or 40% of a maximal interior horizontal length of the tank, and more specifically smaller than 2 metres or 20% of a maximal interior horizontal length of the tank. Water inlet openings located too far away from the cluster of inlet openings are not deemed being able to contribute sufficiently to the cluster of inlet openings for being deemed part of said cluster and its task of providing a more homogenous and laminar circulating flow of water within the tank.

In one example embodiment, the active flow control system further comprises a pump having a pump outlet connected to the first and/or second water inlet arrangement via a water inlet pipe for supplying pressurized water to the first and/or second water inlet arrangement, and the active flow control system is configured such that a flow rate of the water injected at any two locations of the one elongated inlet opening, or at any two inlet openings of the plurality of inlet openings, of the first and/or second water inlet arrangement do not differ more than 40% , specifically 30%, and more specifically 20%. A certain level of harmonisation of injected water flow rate between the various inlet openings facilitates generation of a more homogenous and laminar circulating flow of water within the tank.

In another example embodiment, the one or plurality of inlet openings of each of the first and second water inlet arrangements extends or are arranged primarily in a vertical direction. Since injection of water into the tank over a relatively large vertical span is desired, arranging the one or more inlet openings in the vertical direction is a cost-efficient solution because supply of water to the water inlet openings can be made more compact and less distributed in the horizontal direction.

In a further example embodiment, each of the first and second water inlet arrangements is configured for injecting water in a direction at a first angle of 0 - 45 degrees, specifically 5 - 35 degrees, and more specifically 10 - 30 degrees to the longitudinal direction of the tank. The optimal direction of water injection depends on parameters such as the position first and second water inlet arrangement relative to each respective curved end section, the design of the first and second water inlet and outlet arrangements, the specific tank form, water inlet flow rate, etc., and may be selected with the aim of reducing the likelihood of occurrence of a wake with turbulent water.

In one example embodiment, the first water outlet arrangement is configured for sucking water over more than 50%, specifically over more than 70%, and more specifically over more than 80%, of the maximal depth. Having also the water outlet arrangement operating to suck water over a large vertical span the vertical water flow components within the circulating flow is reduced, thereby contributing to a more homogenous and laminar flow of water. Moreover, increased vertical water suction span generally leads to a more homogenous and laminar circulating flow of water within the tank.

In a further example embodiment, the elongated partition has curved side wall surfaces at the first and second longitudinal end regions connected by straight intermediate side wall surfaces, as seen from above. Moreover, a transition point is provided at the transition between the curved side wall surface and the straight intermediate side wall surface.

Furthermore, the curved side wall surfaces of the elongated partition may have any type of curved shapes. However, a circular-shaped curved side wall surfaces of the partition may be deemed advantageous in terms of manufacturing and reduced risk for flow separation.

In one example embodiment, each of the first and second water inlet arrangements is located within 10 metres or 20% of a maximal interior longitudinal length of the tank, specifically within 5 metres or 10% of a maximal interior longitudinal length of the tank, and more specifically within 1 metre or 5% of a maximal interior longitudinal length of the tank, from a transition point between a curved side wall surface and a straight intermediate side wall surface. Flow analysis and experimental results of stadium-formed tanks show that this specific location of the first and second water inlet arrangements efficiently contributes to avoiding any wake of turbulent water caused by flow separation in the area of the first and second curved end sections.

In a further example embodiment, the active flow control system further comprises a second water outlet arrangement for sucking water from the tank, the first water outlet arrangement is located at a first longitudinal end region of the partition, and the second water outlet arrangement is located at a second longitudinal end region of the partition. By placing the first and second water outlet arrangements in vicinity of flow separation occurring at the curved end sections, the risk for flow separation and following wake of turbulent low-quality water may be reduced.

In still a further example embodiment, each of the first and second water outlet arrangements has one elongated outlet opening or a plurality of outlet openings for sucking water from the tank, the one or plurality of outlet openings of the first water outlet arrangement is located on the curved side wall surface at the first longitudinal end region of the partition, and the one or plurality of outlet openings of the second water outlet arrangement is located on the curved side wall surface at the second longitudinal end region of the partition. By placing the first and second water outlet arrangements in vicinity of flow separation occurring at the curved end sections, the risk for flow separation and following wake of turbulent low-quality water may be reduced.

In one example embodiment, the plurality of outlet openings of each of the first and second water outlet arrangements correspond to perforations or holes in the curved side wall surfaces at the first and second longitudinal end regions of the partition. Perforations or holes in the curved side wall enables cost-efficient manufacturing of first and second water outlet arrangements of the tank.

In another example embodiment, the first water inlet arrangement is configured for injecting water in a direction substantially parallel with a horizontal plane of the tank. Vertical water flow components within the tank is largely inconsistent with a homogenous and laminar circulating flow of water within the tank. Hence, by having the first water inlet arrangement being configured for injecting water in horizontal plane, a more homogenous and laminar circulating flow of water within the tank is accomplished.

According to a further example embodiment, the first water outlet arrangement has one elongated outlet opening or a plurality of outlet openings for sucking water from the internal volume, wherein the one or plurality of outlet openings define an outer border of a water outlet region, and wherein the water outlet region extends in a vertical direction over more than 50%, specifically 65%, and more specifically 80% of the maximal depth. It is thus the one or more outlet openings that define the area of water outlet region, and increased vertical span of water outlet out from the tank generally leads to a more homogenous and laminar circulating flow of water within the tank.

In yet a further example embodiment, said outer border of said water outlet region is defined only by those outlet openings of the first water outlet arrangement forming a cluster having a vertical distance between neighbouring outlet openings of the first water outlet arrangement smaller than 3 metres or 40% of the maximal depth, specifically smaller than 1.5 metres or 25% of the maximal depth, and more specifically smaller than 0.5 metre or 10% of the maximal depth, and a horizontal distance between neighbouring outlet openings of the first water outlet arrangement smaller than 10 metres or 75% of a maximal interior horizontal length of the tank, specifically smaller than 5 metres or 40% of a maximal interior horizontal length of the tank, and more specifically smaller than 2 metres or 20% of a maximal interior horizontal length of the tank. Water outlet openings located too far away from the cluster of outlet openings are not deemed being able to contribute sufficiently to the cluster of outlet openings for being deemed part of said cluster and its task of providing a more homogenous and laminar circulating flow of water within the tank.

According to a further example embodiment, the one or plurality of outlet openings of each of the first and second water outlet arrangements extends or are distributed over at least 40%, specifically at least 60%, and more specifically at least 80%, of the curved side wall surface at the first and second longitudinal end region, respectively, as seen from above. By placing the first and second water outlet arrangements in vicinity of flow separation occurring at the curved end sections, the risk for flow separation and following wake of turbulent low-quality water may be reduced, and by distributing the outlet opening(s) over large area of the curved side wall water suction out of the tank may be accomplished over a larger surface area, enabling reduced outlet flow rate at each outlet opening and thereby increased homogenous and laminar flow.

In yet a further example embodiment, the first water outlet arrangement is configured for sucking water over more than 60%, specifically over more than 70%, and more specifically over more than 80% of the water depth. Sucking water from the tank over an increased vertical span generally leads to a more homogenous and laminar circulating flow of water within the tank.

Further features of, and advantages with, the present disclosure will become apparent when studying the appended claims and the following description. The skilled person realize that different features of the present disclosure may be combined to create embodiments other than those described in the following, without departing from the scope of the present disclosure.

### BRIEF DESCRIPTION OF THE DRAWINGS

The various example embodiments of the disclosure, including its particular features and example advantages, will be readily understood from the following illustrative and non-limiting detailed description and the accompanying drawings, in which:
Figure 1a shows a 3D-view of a stadium-shaped fish tank,
Figure 1b shows a top view of stadium-shaped fish tank with flow separation at curved end sections,
Figure 2a shows a 3D-view of a stadium-shaped fish tank according to the disclosure having an active flow control system
Figure 2b shows a top view of the tank according to fig. 2a,
Figure 3 shows other aspects and features of the top view according to figure 2b,
Figure 4a shows an example embodiment of an end of the partition with first water inlet arrangement and first water outlet arrangement,
Figure 4b shows a detailed 3D-view of the inlet arrangement of figure 4a as such,
Figure 5a shows a further example embodiment of an end of the partition with first water inlet arrangement and fist water outlet arrangement,
Figure 5b shows a detailed 3D-view of the first inlet and outlet arrangement of figure 5a as such,
Figures 6-10 show various example embodiments of the fish tank according to the disclosure,
Figures 11a-11c show various example embodiments of the cross-sectional shape of the tank,
Figure 12a-12e show various example embodiments of the first water inlet arrangement, as well as the resulting first water inlet region 79, and
Figure 13 briefly describes the basic steps of a method according to the disclosure.

### DETAILED DESCRIPTION OF EXAMPLE EMBODIMENTS OF THE DISCLOSURE

The present disclosure will now be described more fully hereinafter with reference to the accompanying drawings, in which exemplary embodiments of the disclosure are shown. The disclosure may, however, be embodied in many different forms and should not be construed as limited to the embodiments set forth herein; rather, these embodiments are provided for thoroughness and completeness. Like reference characters refer to like elements throughout the description. The drawings are not necessarily to scale and certain features may be exaggerated in order to better illustrate and explain the exemplary embodiments of the present disclosure.

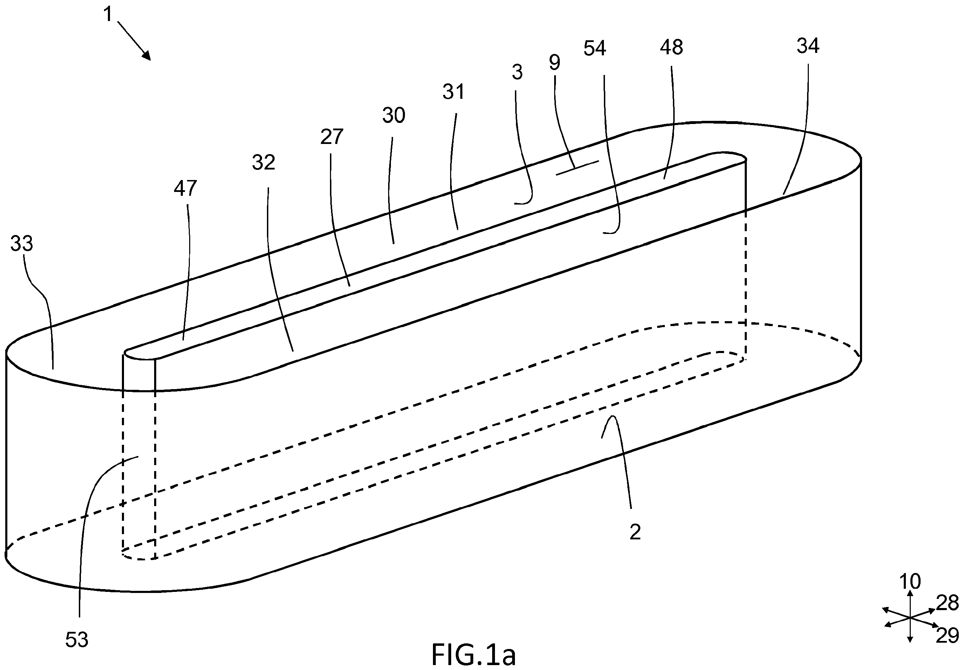

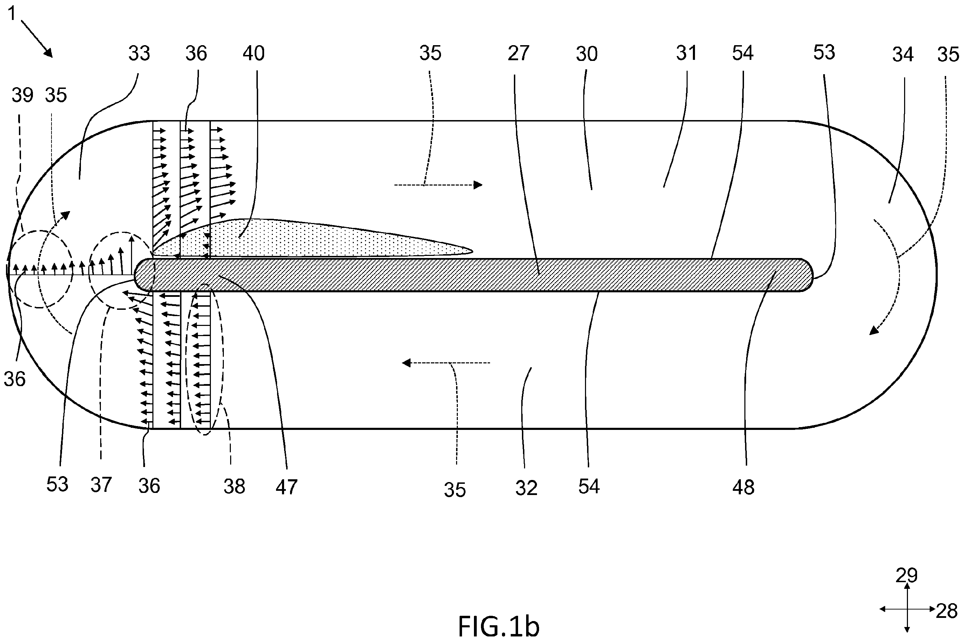

Figure 1 shows a schematic 3D-view of a fish farming tank 1 for cultivating living fish. The tank 1 has an elongated stadium shape with an elongated partition 27 located centrally along a longitudinal direction 28 of the tank 1, as seen from above, such that a continuous tank channel 30 with first and second parallel longitudinal channel sections 31, 32 and first and second curved end sections 33,34 is provided within the tank.

This type of tank is also sometimes referred to as D-shaped tank due to the D-shaped longitudinal ends of the tank 1.

The tank 1 has a bottom 2 and a continuous side wall 3 forming an elongated stadium. The elongated partition 27 has curved side wall surfaces 53 at the first and second longitudinal end regions 47, 48 connected by straight intermediate side wall surfaces 54.

Specifically, each of the first and second parallel longitudinal channel sections 31, 32 is defined by the bottom 2, the vertical straight intermediate side wall surfaces 54 of the elongated partition 27 and an interior surface of the side wall 3 of the tank 1. Moreover, each of the first and second curved end section 33, 34 is defined by the bottom 2, the curved side wall surface 53 of the elongated partition 27 and an interior surface of the side wall 3 of the tank 1.

In the illustrated example embodiment the tank 1 the bottom wall 2, curved side wall 3, and elongated partition 27 jointly define an internal volume 4 for holding water up to a maximal water fill level 9.

Figure 1b schematically illustrates a top view of the fish farming tank for cultivating living fish of figure 1a. The tank 1 has an elongated stadium shape with a longitudinal direction 28 and a transverse direction 29. The tank 1 has further the elongated partition 27 located centrally along a longitudinal direction 28 of the tank 1, as seen from above, such that a continuous tank channel 30 with first and second parallel longitudinal channel sections 31, 32 and first and second curved end sections 33, 34 is provided within the tank 1. Water within the tank 1 is arranged to circulate within the continuous tank channel 30 along a circulating path 35, as schematically illustrated in figure 1b.

The elongated partition 27 may be designed as a substantially solid element, as schematically shown in figure 1b, or including an internal cavity as seen from a top view. The elongated partition 27 has curved side wall surfaces 53 at the first and second longitudinal end regions 47, 48 connected by straight intermediate side wall surfaces 54, as seen from above.

The fish farming tank for cultivating living fish and method for generating a circulating flow of water within the tank 1 according to the present disclosure are based on the understanding that circulating water flow within a tank 1 having an elongated stadium shape may depending on the design of the tank and associated circulating water flow exhibit areas of turbulence and whirl due to flow separation within the tank 1.

For example, the depending on the design of the tank and water flow speed, etc., water flow velocity vectors 36 in a horizontal plane of the water in the tank in various sections of the continuous tank channel 30 show that the water flow velocity tend to strongly increase in a first region 37 of the first curved end section 33 having a small radius compared with the flow velocity in a region 38 of the second longitudinal channel section 32 shortly before arriving at the first curved end section 33. Moreover, water flow velocity tend to decrease in a second region 39 of the first curved end section 33 having a large radius compared with the flow velocity in said region 38 of the second longitudinal channel section 32.

As a result of such flow behaviour, which generally is caused by the sharp change of flow direction in the first curved end section 33 and the centrifugal force acting on the fluid, flow separation typically occurs leading to a wake with turbulent flow in a region 40 of the first longitudinal channel section 31 following the first region 37 of the first curved end section 33. The same wake formation occurs in corresponding region of the second longitudinal channel section 32 following the second curved end section 34.

However, wake formation with turbulent flow may form a region of the tank 1 having reduced water quality because this region may not always receive oxygen and nutrition added to the tank, and refuse substances may accumulate and being poorly removed. Uneaten food and fish faeces accumulate in poor circulation regions, due to small velocity, creating positive environment for bacterial growth. Therefore, it is of crucial importance to design an active flow control system, which will target those regions, and even out the flow throughout the whole water volume which is fish living habitat

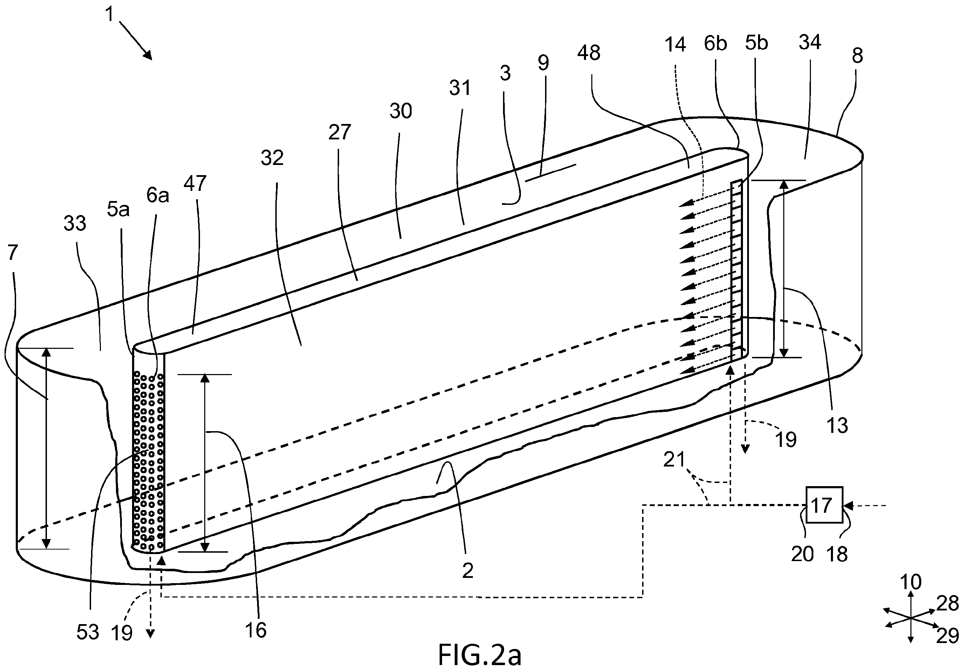

A solution provided by the present disclosure for avoiding, or at least reducing, such wake formation in a tank 1 is schematically illustrated in figure 2a, which shows a perspective view of a fish farming tank for cultivating living fish, wherein the tank 1 comprises an active flow control system for generating a circulating flow of water within the tank 1, wherein the tank 1 has an elongated stadium shape with an elongated partition 27 located centrally along a longitudinal direction 28 of the tank 1, as seen from above, such that a continuous tank channel 30 with first and second parallel longitudinal channel sections 31, 32 and first and second curved end sections 33, 34 is provided within the tank 1, wherein the active flow control system has a first and a second water inlet arrangement 5a, 5b for injecting water into the tank 1 and a first water outlet arrangement 6a for removing water from the tank 1, wherein the first water inlet arrangement 5a is located at a first longitudinal end region 47 of the partition 27 and configured for injecting water into the first longitudinal channel section 31, and wherein the second water inlet arrangement 5b is located at a second longitudinal end region 48 of the partition 27 and configured for injecting water into the second longitudinal channel section 32.

In the perspective view of figure 2a the side wall 3 is showed in a partly cut-away view for better illustrating the first and second longitudinal end regions 47, and the first water inlet arrangement 5a is hidden on the rear side of the elongated partition 27.

As illustrated in figure 2a, the first and second water inlet arrangements 5a, 5b are located and configured to inject water into regions of the tank 1, which otherwise potentially suffer risk from exhibiting wake formation. Any such wake formation in said regions is thus eliminated or at least strongly reduced by means of the specific location and orientation of the first and second water inlet arrangements 5a, 5b according to the disclosure, such that a more homogeneous and laminar circulating flow of water in the whole volume of the tank is accomplished.

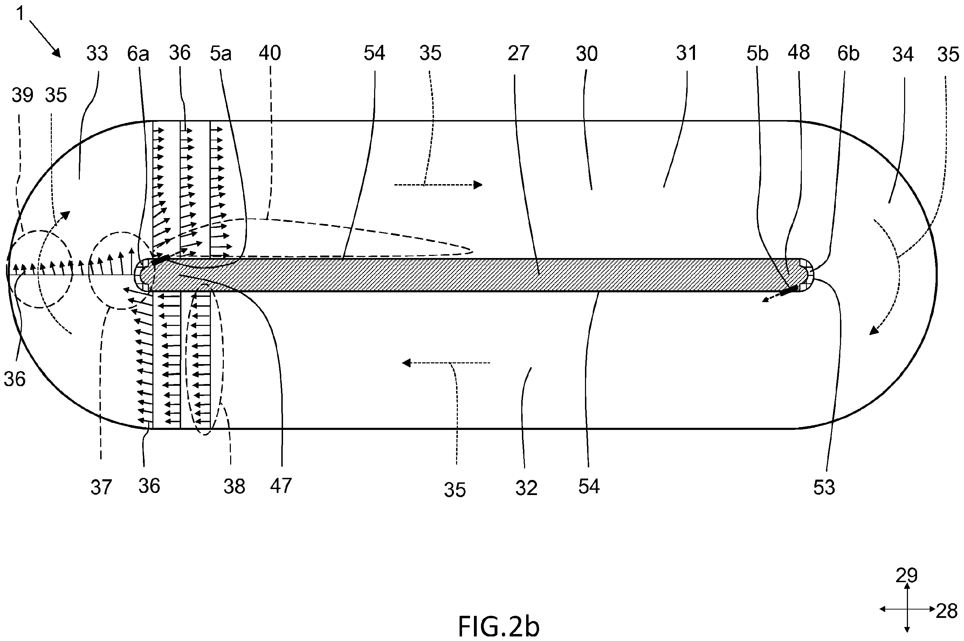

This behaviour of the circulating water flow within the tank 1 is confirmed by results based on experimental tests and simulations of the water flow within the tank 1, which result in schematically illustrated by the water flow velocity vectors 36 in figure 2b.

Specifically, figure 2b, which shows a top view of the tank 1, confirms that flow separation at the first and second curved end sections 33, 34, and the following wake formation in a region 40 of the first and second longitudinal channel sections 31, 32 are eliminated by means of the active flow control system according to the invention.

Moreover, in the region 38 of the second longitudinal channel section 32 shortly before arriving at the first curved end section 33, the water flow behaviour depicted in the tank of figure 2b is substantially identical with the water flow behaviour depicted in the tank of figure 1b. The water flow behaviour in this region 38 has a very homogenous and laminar flow, with nearly parallel and equally long flow velocity vectors 36, thereby enabling good water quality within the entire channel 30, and thus facilitating a full utilization of the channel 30.

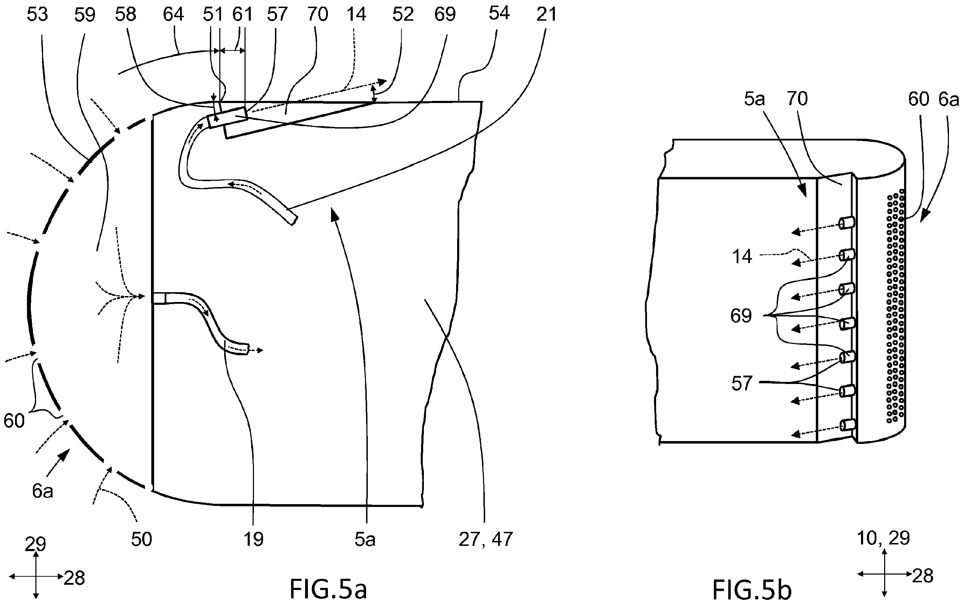

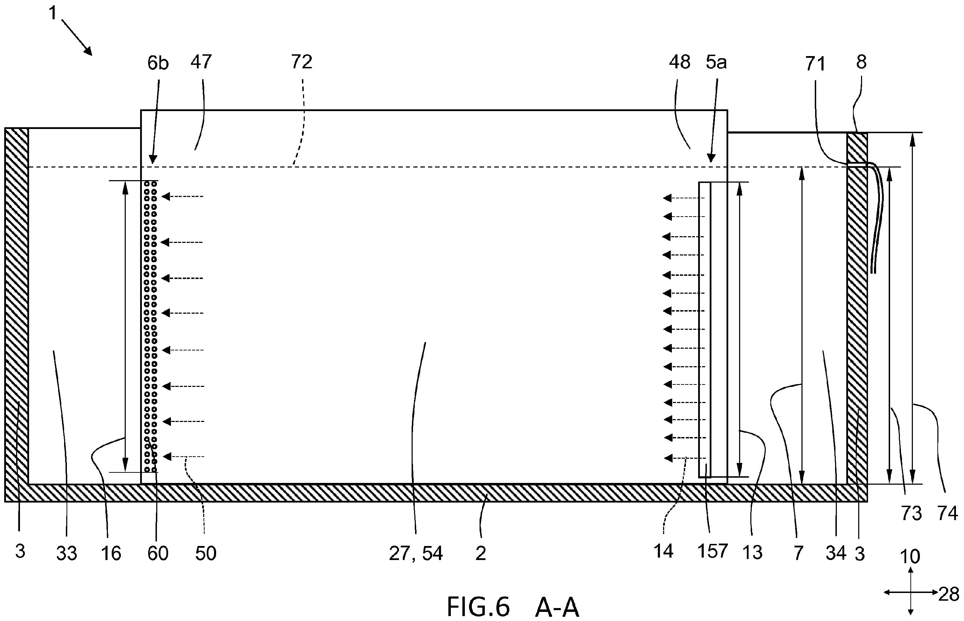

However, a significant difference in terms of water flow behaviour can be seen in the first region 37 of the first curved end section 33 having a small radius. Specifically, the water flow velocity in the first region 37 of the first curved end section 33 of the tank of figure 2b is generally reduced compared with the water flow velocity of the same region of the tank of figure 1b, while the water flow velocity in the second region 39 of the first curved end section 33 having a large radius is higher in the tank of figure 6a compared with the water flow velocity of the same region of the tank of figure 5. In other words, the water flow behaviour in the first curved end section 33 of the channel 30 is more homogenous and exhibits a more equal flow velocity in the large and small radius regions 39, 37 of the first curved end section 33 compared with the flow behaviour in the same regions of the tank 1 of figure 5, thereby reducing the risk for flow separation and contributing to more equal water quality and increased utilization of the channel 30 in the first curved end section 33. This water flow behaviour applies equally to the second curved end section 34.

By avoiding poor water quality regions the water quality and condition is levelled out and made more equal within the entire tank interior volume, thereby increasing the possible utilisation of total tank volume for fish production, such that overall cost-efficiency of the tank can be improved. Moreover, by providing a certain level of circulating flow of water within the whole water volume of the tank the fish population within the tank is generally more physically active due to less possibility of resting in a calm area without flow, and said increased level of physical activity typically has a positive effect on fish health and quality.

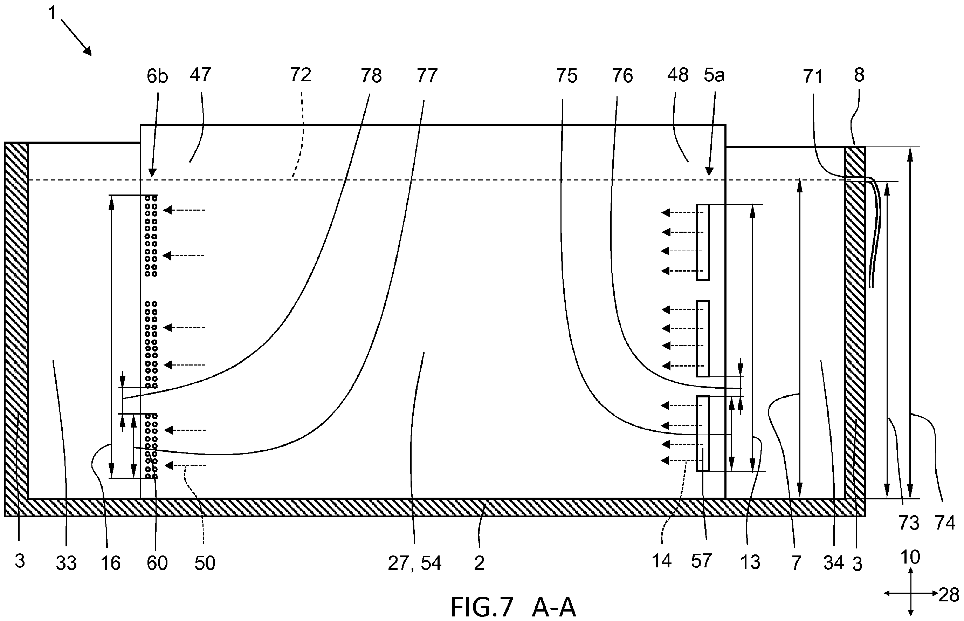

In the example embodiment of the tank 1 showed in figure 2a, the tank 1 comprises a bottom 2 and a side wall 3 defining an internal volume 4 for holding water up to a maximal water fill level, and the second water inlet arrangement 5b is clearly configured for injecting water over a length 13 that is more than 50% of a the maximal depth 7 stretching from an interior surface of the bottom 2 to the maximal water fill level. In fact, in the example embodiment of figure 7b, the first water inlet arrangement 5a is configured for injecting water over a length 13 that is about 80 - 90% of the maximal depth 7 stretching from an interior surface of the bottom 2 to the maximal water fill level.

Increased water injection span in a vertical direction 10 generally results in improved circulating flow of water in terms of homogeneity and laminar flow. However, a water injection over more than 50%, specifically over more than 70%, and more specifically over more than 80% of the maximal depth 7 is deemed to provide a significant improvement in terms of increased quality and productivity of fish food production due to a more homogeneous and laminar circulating flow of water in the entire volume of the tank 1.

Specifically, a more uniform and laminar circulating flow in the whole tank volume may be accomplished by injecting and sucking water in and out of the tank in more gentle way. For example, a more gentle water circulation can be achieved by increasing the area of the water injection hole and/or water suction hole in vertical direction. By increasing the area of the hole(s) of the water injection and/or water suction, velocity of water injection/suction goes down assuming constant mass flow. That will locally effect the flow in the way of vortex reduction and more efficient energy transfer. By spreading water injection/sucking hole area in vertical direction, more even flow is achieved between layers along the water depth.

In figure 2a the location and direction of injected water is illustrated be means of a water injection vectors 14.

The maximal water fill level of the tank 1 of figure 2a may for example be represented by an overflow level of the tank 1. The overflow level may for example be defined by a specifically provided overflow outlet, which for example may be provided in the side wall 3 of the tank 1. Alternatively, the overflow level may for example simply be defined by the water level at which water begins to flow over the upper edge 8 of the side wall 3. Still more alternatively, the maximal water fill level of the tank 1 of figure 1a may for example be represented be a specific fill level marking 9 indicating an intended maximal water fill level.

Each of the first and second water inlet arrangements 5a, 5b has one elongated inlet opening 157 or a plurality of inlet openings 57 for injecting water into the tank 1.

For example, the first water inlet arrangement 5a may have a single inlet opening stretching in the vertical direction 10. Such a single elongated opening may for example be provided by means of water inlet arrangement having an elongated slit, i.e. a long narrow opening defined by two straight and parallel lips.

Alternatively, the first water inlet arrangement 5a may have a plurality of inlet openings arranged to extend primarily in the vertical direction 10. In other words, a region defined by a plurality of inlet openings of the first water inlet arrangement 5a may have a vertical length that is larger, specifically three times larger, and more specifically six times larger, than a horizontal length of said region defined by said plurality of inlet openings. More in detail, the plurality of inlet openings may be arranged along a vertical line.

Each individual inlet opening of the plurality of inlet openings may have a circular shape, elongated vertical shape or any other type of shape.

In the example embodiment of figure 2a, the second water inlet arrangement 5b comprises a single vertically arranged elongated water inlet having a plurality of spaced apart guide blades or vanes oriented parallel with the horizontal plane for ensuring the second water inlet arrangement 5b injects water in a direction substantially parallel with a horizontal plane of the tank 1.

The first and second water inlet arrangements 5a, 5b are configured for injecting water in a direction substantially parallel with a horizontal plane of the tank 1, wherein the horizontal plane is defined by a first horizontal direction 11 perpendicular to a second horizontal direction 12. Thereby, a vertical flow component of the water within the tank is kept low, such that a more homogenous and laminar circulating flow can be accomplished in the whole internal volume 4 of the tank 1. The term substantially in this specific situation means within +/-10 degrees, specifically +/- 5 degrees, from the horizontal plane.

As also shown in figure 2a, the first water outlet arrangement 6a is configured for sucking water out from the tank 1 over a length 16 that is more than 50% of said maximal depth 7. In fact, in the example embodiment of figure 2a, the first water outlet arrangement 6a is configured for sucking water over a length 16 that is about 80 - 90% of said maximal depth 7 stretching from an interior surface of the bottom 2 to the maximal water fill level.

In this example embodiment, first water outlet arrangement 6a comprises a plurality of outlet openings located substantially equally distributed over a large area of the first longitudinal end region 47 of the elongated partition 27, specifically on a curved side wall surface 53 of the first longitudinal end region 47 of the elongated partition 27.

More in detail, the first water outlet arrangement 6a is configured for sucking water over more than 50%, specifically over more than 70%, and more specifically over more than 80%, of the maximal depth 7.

For example, suction slots may be placed along the 180 degree curved side wall surface 53 in order to reduce a transversal flow component of the water layer in the close vicinity of the curved side wall surface 53. This results in slowing down those water layers in the 180 degree turn, such that a large shear action occurs between radially inner and outer water layers in the first and second curved end sections 33, 34 may be avoided or at least reduced.

Significant shear will otherwise be created if water layers with large radius and water layers with small radius have equal speed, but need to pass different lengths in the same time period. The suction from the water layers with smallest radius will reduce the kinetic energy, which would otherwise trigger the separation at the beginning of straight channel region, after the 180 degrees turn. Hence, with the suction slots located on a curved side wall surface 53 of the first longitudinal end region 47 of the elongated partition 27 inflection points may be removed from the velocity profiles, and therefore create more laminar flow.

In the example embodiment of figure 2a, the first water outlet arrangement 6a is configured for sucking water over a length 16 that is about 90% of the maximal depth 7 stretching from an interior surface of the bottom 2 to the maximal water fill level. Increased water emptying span in a vertical direction 10 generally results in improved circulating flow of water in terms of homogeneity and laminar flow because water can be sucked out from the tank 1 with reduced level of vertical flow component. However, water suction over a span that has a length of 50% of the maximal depth 7 is deemed to provide a significant improvement in terms of increased quality and productivity of fish food production due to a more homogeneous and laminar circulating flow of water in the entire volume of the tank.

The first water outlet arrangement 6a may have various configurations. For example, the first water outlet arrangement 6a may have a single elongated outlet opening, or a plurality of outlet openings, extending primarily in the vertical direction. In other words, the single elongated outlet opening, or a region defined by a plurality of outlet openings, of the first water outlet arrangement 6a has a vertical length that is larger, specifically three times larger, and more specifically six times larger, than a horizontal length of said single elongated outlet opening or said region defined by said plurality of outlet openings.

As schematically illustrated in figure 2a, the active flow control system may further comprise a pump 17 having a pump outlet 20 connected to the first and/or second water inlet arrangements 5a, 5b via a water inlet pipe 21 for supplying pressurized water to the first and/or second water inlet arrangements 5a, 5b.

In the example embodiment of figure 2a, a common single pump 17 is connected to both the first and second water inlet arrangements 5a, 5b. However, each of the first and second water inlet arrangements 5a, 5b may alternatively be connected to a separate and individual pump.

Fresh water from a fresh water source, such as the sea, lake, river, pond or the like, may be supplied to a pump inlet 18 and further supplied to the tank 1 by means of the pump 17.

A water outlet pipe 19 may be connected to the first water outlet arrangement 6a of the tank 1 for outflow of water from the tank 1. The outflow of water may be a natural outflow caused by gravitation, and/or forced outflow caused by sucking water out of the tank by a pump (not showed) connected to the water outlet pipe 19.

According to an alternative embodiment, the pump inlet 18 may be connected to the water outlet pipe 19 of the first water outlet arrangement 6a, for example via a filter and/or a water cleaning device and/or a water conditioning device, and subsequently returning the cleaned and conditioned water to the tank 1 via the pump 17 and the water inlet pipe 21, such that a closed active flow control system is provided.

The active flow control system is configured such that a flow rate of the water injected at any two locations of the one elongated inlet opening, or at any two inlet openings of the plurality of inlet openings, of the first water inlet arrangement 5a do not differ more than 40% , specifically 30%, and more specifically 20%. Said flow rate of the water injected at any two locations of the one elongated inlet opening, or at any two inlet openings of the plurality of inlet openings, of the first water inlet arrangement 5a are in fact preferably equally large.

Thereby it is avoided that water is injected with for example twice the flow rate at for example an inlet opening the lower end of the first water inlet arrangement 5a compared with a flow rate at an inlet opening the upper end of the first water inlet arrangement 5a, or that water is injected with for example twice the flow rate at for example an upper location of the elongated inlet opening compared with a flow rate at a lower location of the elongated inlet opening of the first water inlet arrangement 5a. The same preferably applies also to the second water inlet arrangements 5b.

Moreover, in a tank 1 having a plurality of water inlet arrangements, such as shown in figure 2a, the active flow control system may be configured such that a flow rate of the water injected at the plurality of water inlet arrangements 5a, 5b of the active flow control system do not differ more than 40%, specifically 30%, and more specifically 20%, between any inlet openings of the plurality of water inlet arrangements 5a, 5b. Said flow rate of the water injected at any two locations of the plurality of water inlet arrangements are in fact preferably equally large. Thereby is ensured that the water injection flow rate does not vary too much between the plurality of water inlet arrangements 5a, 5b, such that a more homogenous and laminar circulating water flow may be accomplished.

Without such a harmonization of flow rate at the first and second water inlet arrangements 5a, 5b, the first water inlet arrangement 5a may for example have twice the flow rate of the second water inlet arrangement 5b, but this would lead to less homogenous circulating water flow throughout the whole of the tank 1.

As schematically illustrated in figures 2a and 2b, for even further reducing the risk of flow separation in the area of the sharp change of flow direction occurring in the first and second curved end section 33, 34 of a tank 1 having an elongated stadium shape, and for even better contributing to more equal water quality and increased utilization of the channel 30 in the first and second curved end sections 33, 34, the active flow control system may according to still a further example embodiment of the tank 1, in addition to the first water outlet arrangement 6a also comprise a second water outlet arrangement 6b for sucking water from the tank 1, wherein the first water outlet arrangement 6a is located at the first longitudinal end region 47 of the partition 27, and wherein the second water outlet arrangement 6b is located at the second longitudinal end region 48 of the partition 27.

Thereby, high velocity water flow in the first region 37 of the first curved end section 33 having a small radius tend to be sucked into the one or more outlet openings of the first and second water outlet arrangement 6a, 6b, as illustrated by water outflow vectors 50 in figure 6b, thereby reducing the amount of water that exhibit a strong increase in water flow velocity in a first region 37 of the first curved end section 33 due to the sharp change of flow direction in the first curved end section 33 in combination with the centrifugal force acting on the fluid. As a result, the risk for flow separation in the first region 37 is reduced, and thereby also risk for wake formation with turbulent flow in the region 40 of the first longitudinal channel section 31 following the first region 37.

Except for the water inlet and outlet openings associated with first and second water inlet arrangements 5a, 5b and the first and second water outlet arrangements 6a, 6b, the stadium shaped tank 1 may be free from any water inlet openings or outlet openings associated with the active flow control system. Specifically, the entire side wall 3 of the stadium shaped tank 1 may be free from any water inlet openings or outlet openings associated with the active flow control system.

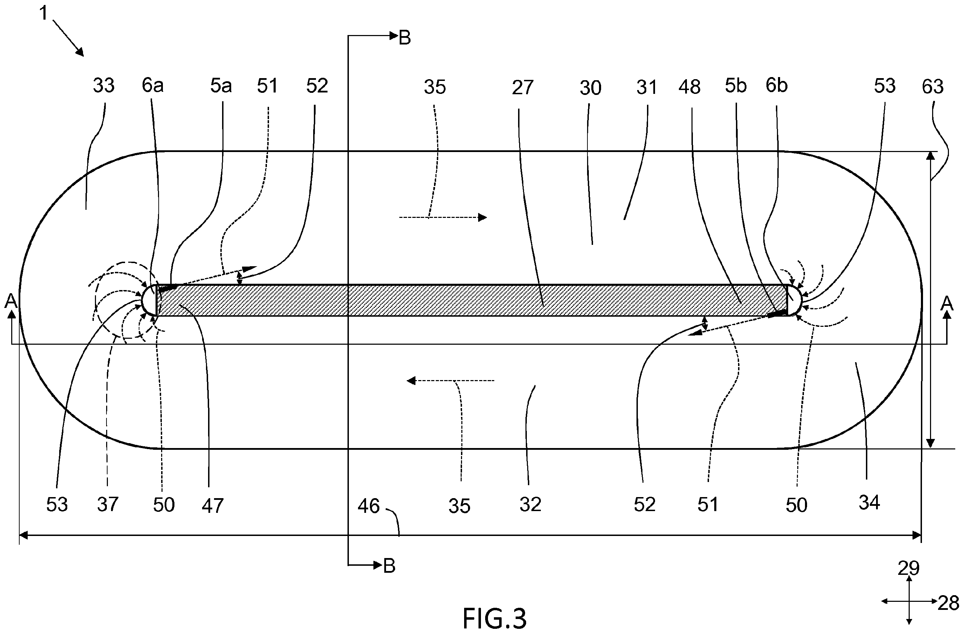

Figure 3 schematically shows a top view of the tank 1 including further details of the tank 1 and active flow control system. In this example embodiment of the tank 1, each of the first and second water inlet arrangements 5a, 5b is configured for injecting water 14 in a direction forming a first angle 52 to the longitudinal direction 28 of the tank 1, such as about 20 degrees. In fact, said first angle may be in the range of 0 - 45 degrees, specifically 5 - 35 degrees, and more specifically 10 - 30 degrees, while contributing to a more homogenous flow and more equal water quality throughout the tank 1.

The one or plurality of outlet openings of the first and second water outlet arrangements 6a, 6b may for example be located on a curved outer side wall surface 53 located at each of the first and second longitudinal end regions 47, 48 of the partition 27, respectively. The curved outer side wall surface 53 at each of the first and second longitudinal end regions 47, 48 of the partition 27 extends in the vertical direction and contributes to a smooth and laminar flow of water through the first and second curved end sections 33, 34 of the channel 30. The curved shape of said side wall surface 53 may for example be a semi-circular or semi-elliptical shape, or the like.

If there are a plurality of outlet openings of each of the first and second water outlet arrangements 6a, 6b, these outlet openings may correspond to perforations in the curved side wall surfaces 53 at the first and second longitudinal end regions of the partition. For example, said plurality of outlet openings may correspond to perforations or holes made in curved sheet material, such as metal or plastic sheet material, located at each of the first and second longitudinal end regions 47, 48 of the partition 27.

The outlet openings may for example have a circular, elliptical, elongated, rectangular shape, or the like.

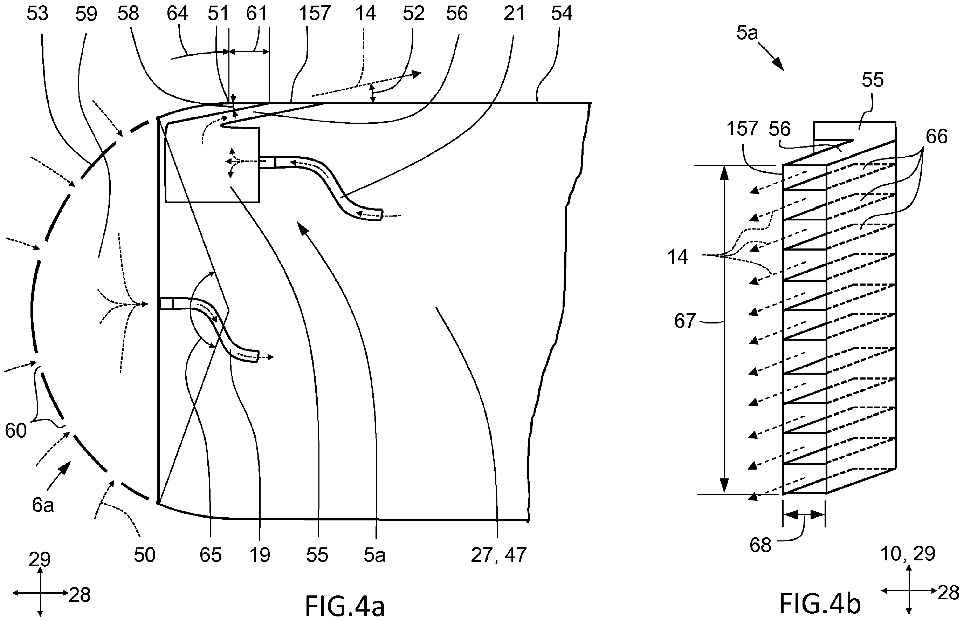

Figure 4a shows a cross-section in a horizontal plane of an example embodiment of the first longitudinal end region 47 of the partition 27. The second longitudinal end region 48 may have an identical layout. The first water inlet arrangement 5a may comprise water pressure equalizing pipe or chamber 55 configured for receiving pressurized water from a water circulation pump (not showed) via a water inlet pipe 21 and to provide water with substantially equal pressure along the vertical length of the first water inlet arrangement 5a. A water directing duct 56 connected with pressure equalizing pipe or chamber 55 may be configured for receiving water from the pressure-equalizing pipe or chamber 55 and to guide the water towards an elongated vertically arranged water inlet opening 157.

The water directing duct 56 may for example have a generally straight shape and being arranged with a second angle 58 of about 20 degrees to the longitudinal direction 28 of the tank 1 for enabling the first water inlet arrangements 5a to inject water 14 in a direction forming the first angle 52 of about 20 degrees to the longitudinal direction 28 of the tank 1. Similar to the discussion above with reference to the first angle, the second angle may be in the range of 0 - 45 degrees, specifically 5 - 35 degrees, and more specifically 10 - 30 degrees, for contributing to a more homogenous flow and more equal water quality throughout the tank 1.

The actual inlet opening 157 of the first water inlet arrangement 5a is located within 10 metres or 20% of a maximal interior longitudinal length 46 of the tank 1, specifically within 5 metres or 10% of a maximal interior longitudinal length 46 of the tank 1, and more specifically within 1 metre or 5% of a maximal interior longitudinal length 46 of the tank 1, from a transition point 51 between a curved side wall surface 53 and a straight intermediate side wall surface 54 of the elongated partition 27.

In other words, a transition point 51 defined by the meeting point of the curved side wall surface 53 of the first longitudinal end region 47 of the elongated partition 27 with the straight intermediate side wall surface 54 of the elongated partition 27, and a distance 61 in the longitudinal direction 28 between said transition point 51 and the inlet opening 157 of the first water inlet arrangement 5a is within said 10 metres or 20 %, specifically 5 metres or 10 % or more specifically said 1 metre or 5% of a maximal interior longitudinal length 46 of the tank 1. The angular extension of the curved side wall surface 53 is indicated by reference sign 64 in figure 4a, and said transition point 51 is thus located at the end of said angular extension 64.

The first water inlet arrangement 5a may thus be located on the straight intermediate side wall surface 54, as illustrated in the example embodiment of figure 4a, or on the curved side wall surface 53 of the first longitudinal end region 47 of the elongated partition 27. This positioning of the first water inlet arrangement 5a ensures that water is injected in the area otherwise potentially suffering from formation of a wake with turbulent water flow. This positioning of the first water inlet arrangement 5a applies also the second water inlet arrangement 5b correspondingly.

According to the example embodiment of figure 4a, the first water inlet arrangement 6a comprises a plurality of water outlet openings 60 located in the curved side wall surface 53 of the first longitudinal end region 47 of the elongated partition 27. A water collection space 59 may be located inside of the Inside of said water outlet openings 60 and configured to receive and collect water from of said water outlet openings 60 and subsequently supply said water to the water outlet pipe 19, which may guide the water to an outlet or a water cleaning device or a pump . The water collection space 59 may for example have a cross-sectional form of a circular section, a half circle, a circular segment, or the like.

The plurality of outlet openings 60 of each the first water outlet arrangement 6a are distributed over about 80% of the curved side wall surface 53 at the first longitudinal end region 47, as seen from above. In other words, if the curved side wall surface has a cylindrical shape the outlet openings are distributed over an arc length defined by a centre angle 65 of about 144 degrees. In fact, the plurality of outlet openings 60 of each of the first water outlet arrangement 6a may be distributed over at least 40%, specifically at least 60%, and more specifically at least 80%, of the curved side wall surface 53 while still providing an improvement in terms of homogenous and laminar flow of water within the channel 30.

Figure 4b schematically shows a 3D-view of the example embodiment of the first water inlet arrangement 5a of figure 4a in isolation, as seen from the first longitudinal channel section 31 of the channel 30. The single elongated inlet opening 157, which has a plurality of spaced apart guide blades or vanes 66 oriented parallel with the horizontal plane for ensuring the second water inlet arrangement 5b injects water in a direction substantially parallel with a horizontal plane of the tank 1, has a certain vertical length 67 and a certain longitudinal length 68. The vertical length 67 is typically selected, such that the first water inlet arrangement 5a becomes configured for injecting water over at least half of the maximal depth 7 stretching from an interior surface of the bottom 2 to the maximal water fill level. The vertical length 67 of the elongated opening 157 of the first water inlet arrangement is thus selected taking into account the maximal depth 7 of the tank 1.

Depending on the specific circumstance, such as size of tank, number of water inlet arrangements 5a, design and layout of the water inlet arrangement 5a, etc., the plurality of spaced apart guide blades or vanes 66 may possible be removed or reduced in terms of number of blades/vanes.

Figures 5a and 5b show still a further alternative embodiment of the first water inlet arrangement 5a according to the disclosure. The water outlet arrangement 6a of figure 5a and 5b corresponds to the water outlet arrangement 6a of figure 4a. In this example embodiment, the first water inlet arrangement 5a has a plurality of inlet openings 57 for injecting water into the internal volume.

The plurality of inlet openings 57 are located in the straight intermediate side wall surface 54 of the elongated partition 27 and the plurality of inlet openings 57 of the first water inlet arrangement 5a are arranged primarily in the vertical direction 10. Specifically, as illustrated in figure 5b, the plurality of inlet openings 57 of the first water inlet arrangement 5a are arranged aligned in the vertical direction 10 and equidistant from each other.

The inlet openings 57 are formed as individual water inlet nozzles 69. Each inlet nozzle 69 has one inlet opening 57. The nozzles 69 may be interconnected by a fixed water conveying structure, similar to the pressure equalizing pipe or chamber 55 of figure 4a, for distributing water received via the water inlet pipe 21 to all inlet nozzles 69 of the first water inlet arrangement 5a. Alternatively, a water inlet pipe 21 is routed to each individual inlet nozzle 69.

The inlet nozzles 69 may be located in one vertical recess 70 located in the exterior surface of the side wall surface 54 of the elongated partition 27. Alternatively, each inlet nozzle 69 may be located in an individual recess. Thereby, the inlet nozzles 69 do not protrude into the water flow of the channel 30. However, according to a still an alternative embodiment, the exterior surface of the side wall surface 54 is flat and does not exhibit a recess, and the inlet nozzles are instead protruding slightly into the channel 30.

Each of the inlet nozzles 69 is configured for injecting water 14 in a direction forming a first angle 52 to the longitudinal direction 28 of the tank 1, such as about 20 degrees. In fact, said first angle may be in the range of 0 - 45 degrees, specifically 5 - 35 degrees, and more specifically 10 - 30 degrees, while contributing to a more homogenous flow and more equal water quality throughout the tank 1.

The inlet openings 57 of the first water inlet arrangement 5a is located within 10 metres or 20% of a maximal interior longitudinal length 46 of the tank 1, specifically within 5 metres or 10% of a maximal interior longitudinal length 46 of the tank 1, and more specifically within 1 metre or 5% of a maximal interior longitudinal length 46 of the tank 1, from a transition point 51 between a curved side wall surface 53 and a straight intermediate side wall surface 54 of the elongated partition 27.

In other words, a distance 61 in the longitudinal direction 28 between said transition point 51 and the inlet openings 57 of the first water inlet arrangement 5a is within said 10 metres or 20 %, specifically 5 metres or 10 % or more specifically said 1 metre or 5% of a maximal interior longitudinal length 46 of the tank 1. The angular extension of the curved side wall surface 53 is indicated by reference sign 64 in figure 4a, and said transition point 51 is thus located at the end of said angular extension 64.

The first water inlet arrangement 5a may thus be located on the straight intermediate side wall surface 54, as illustrated in the example embodiment of figure 4a, or on the curved side wall surface 53 of the first longitudinal end region 47 of the elongated partition 27. This positioning of the first water inlet arrangement 5a ensures that water is injected in the area otherwise potentially suffering from formation of a wake with turbulent water flow. This positioning of the first water inlet arrangement 5a applies also the second water inlet arrangement 5b correspondingly.

Figure 6 shows a side view of cross-section of the tank according to cut A-A in figure 3. Only the first water inlet arrangement 5a and second water outlet arrangement 3 are shown in figure 6, but the first and second water inlet arrangement 5a, 5b of the tank 1 have an identical layout, and the first and second water outlet arrangement 6a, 6b of the tank 1 have an identical layout. This applies equally to the embodiments of the tank 1 described in figures 7-10.

The first water inlet arrangement 5a is configured for injecting water over a length 13 that is longer than half of the maximal depth 7 stretching from an interior surface of the bottom 2 to the maximal water fill level. Specifically, in the example of figure 6, the first water inlet arrangement 5a is configured for injecting water over a length 13 that is about 90% of said maximal depth 7.

The first water inlet arrangement has a single elongated vertically arranged inlet opening 157, and the maximal water fill level determined by an overflow outlet 71 located in the side wall 3 of the tank 1. The water fill level 72 in the tank 1 cannot exceed the overflow outlet 71 and therefore the location of the overflow outlet defines the maximal water fill level, and the vertical length 73 from an interior surface of the bottom 2 to the tank to the overflow outlet 71 equal the maximal depth.

According to an alternative embodiment, the maximal water fill level of the tank 1 could be defined by the water fill level 72 at which water start to flow over the upper edge 8 of the tank by an overflow level of the tank 1, meaning that the vertical length 74 from the interior surface of the bottom 2 to the upper edge 8 of the tank equals the maximal depth 7.

The second water outlet arrangement 6b is configured for sucking water over a length 16 that is more than half of the maximal depth 7 of the tank 1.

Specifically, the second water outlet arrangement 6b has a plurality of outlet openings 60 for sucking water from the internal volume 4, wherein the plurality of outlet openings 60 of the second water outlet arrangement 6b define an outer border of a water outlet region, and wherein the water outlet region extends in a vertical direction 10 over more than 50%, specifically 65%, and more specifically 80% of the maximal depth 7 of the tank 1. In other words, the plurality of outlet openings 60 define a water outlet region or area restricted by the peripheral outlet openings 60 of a cluster of outlet openings 60 forming the second water outlet arrangement 6b, and the maximal vertical length of said water outlet region/area is larger than 50%, specifically 65%, and more specifically 80% of the maximal depth 7 of the tank 1, which maximal depth is defined by the maximal water fill level as discussed above.

In the tank 1 of the example embodiment of figure 6, the water outlet region extends in a vertical direction 10 over about 90% of the maximal depth 7 of the tank 1.

The water outlet region may for example be defined by straight lines between neighbouring outlet openings of the peripheral outlet openings 60 of the cluster of outlet openings 60 forming the second water outlet arrangement 6b.

Furthermore, said outer border of said water outlet region is defined only by those outlet openings 60 of the second water outlet arrangement 6b forming a cluster having a vertical distance between neighbouring outlet openings of the second water outlet arrangement smaller than 3 metres or 40% of the maximal depth 7, specifically smaller than 1.5 metres or 25% of the maximal depth 7, and more specifically smaller than 0.5 metre or 10% of the maximal depth 7, and a horizontal distance between neighbouring outlet openings 60 of the second water outlet arrangement 6b smaller than 10 metres or 75% of a maximal interior horizontal length 46 of the tank 1, specifically smaller than 5 metres or 40% of a maximal interior horizontal length 46 of the tank 1, and more specifically smaller than 2 metres or 20% of a maximal interior horizontal length 46 of the tank 1.

Figure 7 shows still a further example embodiment of the tank 1 according to the disclosure. All aspects of the tank 1 of the embodiment of figure 7 is identical to the embodiment of figure 6, except that the inlet and outlet openings of the active flow control system have a different layout.

Specifically, the first water inlet arrangement 5a has three individual inlet openings 57, each of which has an elongated shape that extends in the vertical direction 10 over a certain vertical length 75. Moreover, the three individual inlet openings 57 are arranged aligned in a vertical direction with a vertical distance 76 between each neighbouring inlet opening 57.

The three individual inlet openings 57 jointly define an outer border of a water inlet region, which extends in a vertical direction over more than 50%, specifically 65%, and more specifically 80% of the maximal depth 7. In fact, the water inlet region defined by the inlet openings 57 in figure 7 extends in a vertical direction over a length 13 of about 90% of the maximal depth 7.

Moreover, said outer border of said water inlet region is defined only by those inlet openings 57 of the first water inlet arrangement 5a forming a cluster having a vertical distance between neighbouring inlet openings 57 of the first water inlet arrangement 5a smaller than 3 metres or 40% of the maximal depth 7, specifically smaller than 1.5 metres or 25% of the maximal depth 7, and more specifically smaller than 0.5 metre or 10% of the maximal depth 7, and a horizontal distance between neighbouring inlet openings 57 of the first water inlet arrangement 5a smaller than 10 metres or 75% of a maximal interior horizontal length 46 of the tank 1, specifically smaller than 5 metres or 40% of a maximal interior horizontal length 46 of the tank 1, and more specifically smaller than 2 metres or 20% of a maximal interior horizontal length 46 of the tank 1.

In the embodiment of figure 7, all three individual inlet openings 57 define the water inlet region because the maximal vertical distance 76 between neighbouring inlet openings 57 is smaller than 40% of the maximal depth 7 and the horizontal distance between neighbouring inlet openings 57 of the first water inlet arrangement 5a is smaller than 75% of a maximal interior horizontal length 46 of the tank 1.

The second water outlet arrangement 6b has three individual sets of circular outlet openings 60, each set of outlet openings 60 extending in the vertical direction 10 over a certain vertical length 77. Moreover, the three individual sets of outlet openings 60 are arranged aligned in a vertical direction 10 with a vertical distance 78 between each neighbouring set of outlet openings 60.

The three individual sets of outlet openings 60 jointly define an outer border of a water outlet region, which extends in a vertical direction over more than 50%, specifically 65%, and more specifically 80% of the maximal depth 7. In fact, the water outlet region defined by the three sets of outlet openings 60 in figure 7 extends in a vertical direction over a length 16 of about 90% of the maximal depth 7.

In the embodiment of figure 7, all three individual sets of outlet openings 60 define the water outlet region because the maximal vertical distance 78 between neighbouring outlet openings 60 is smaller than 40% of the maximal depth 7 and the horizontal distance between neighbouring outlet openings 60 of the second water outlet arrangement 6b is smaller than 75% of a maximal interior horizontal length 46 of the tank 1.

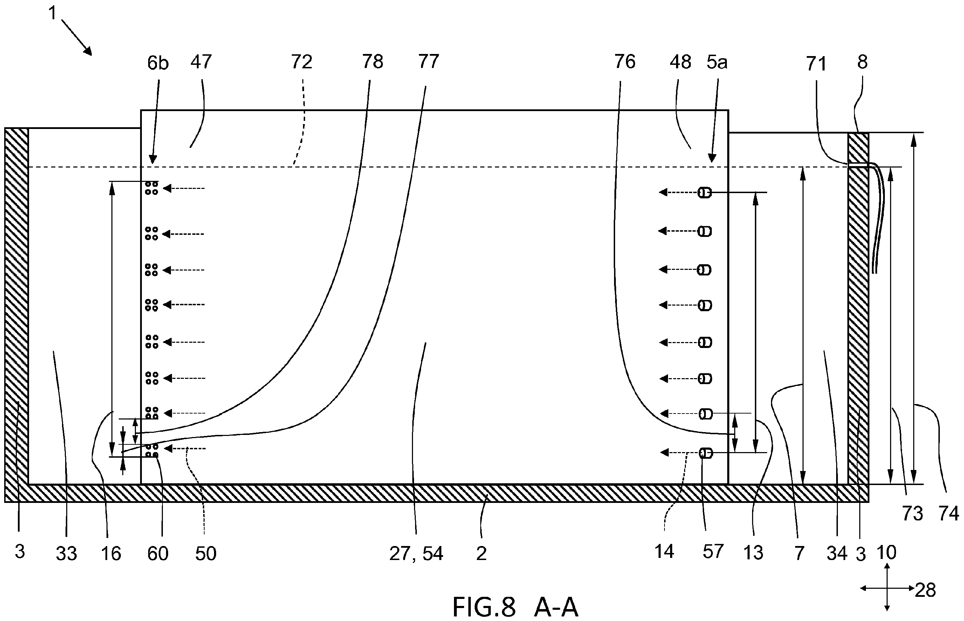

Figure 8 shows still a further example embodiment of the tank 1 according to the disclosure. All aspects of the tank 1 of the embodiment of figure 8 is identical to the embodiment of figure 6, except that the inlet and outlet openings of the active flow control system have a different layout.

Specifically, the first water inlet arrangement 5a has eight individual inlet openings 57, each of which is formed in an individual inlet nozzle as described with reference to 9a-9b. The eight individual inlet openings 57 are arranged aligned in a vertical direction 10 with a vertical distance 76 between each neighbouring inlet opening 57.

The eight individual inlet openings 57 jointly define an outer border of a water inlet region, which extends in a vertical direction over more than 50%, specifically 65%, and more specifically 80% of the maximal depth 7. In fact, the water inlet region defined jointly by the inlet openings 57 in figure 8 extends in a vertical direction over a length 13 of about 90% of the maximal depth 7.

All eight individual inlet openings 57 define the water inlet region because the maximal vertical distance 76 between neighbouring inlet openings 57 is smaller than 40% of the maximal depth 7 and the horizontal distance between neighbouring inlet openings 57 of the first water inlet arrangement 5a is smaller than 75% of a maximal interior horizontal length 46 of the tank 1.

The second water outlet arrangement 6b has eight individual sets of circular outlet openings 60, each set of outlet openings 60 extending in the vertical direction 10 over a certain vertical length 77. Moreover, the eight individual sets of outlet openings 60 are arranged aligned in a vertical direction 10 with a maximal vertical distance 78 between neighbouring set of outlet openings 60.

The eight individual sets of outlet openings 60 jointly define an outer border of a water outlet region, which extends in a vertical direction over more than 50%, specifically 65%, and more specifically 80% of the maximal depth 7. In fact, the water outlet region defined by the eight sets of outlet openings 60 in figure 8 extends in a vertical direction over a length 16 of about 90% of the maximal depth 7.

In the embodiment of figure 8, all eight individual sets of outlet openings 60 define the water outlet region because the maximal vertical distance 78 between neighbouring outlet openings 60 is smaller than 40% of the maximal depth 7 and the horizontal distance between neighbouring outlet openings 60 of the second water outlet arrangement 6b is smaller than 75% of a maximal interior horizontal length 46 of the tank 1.

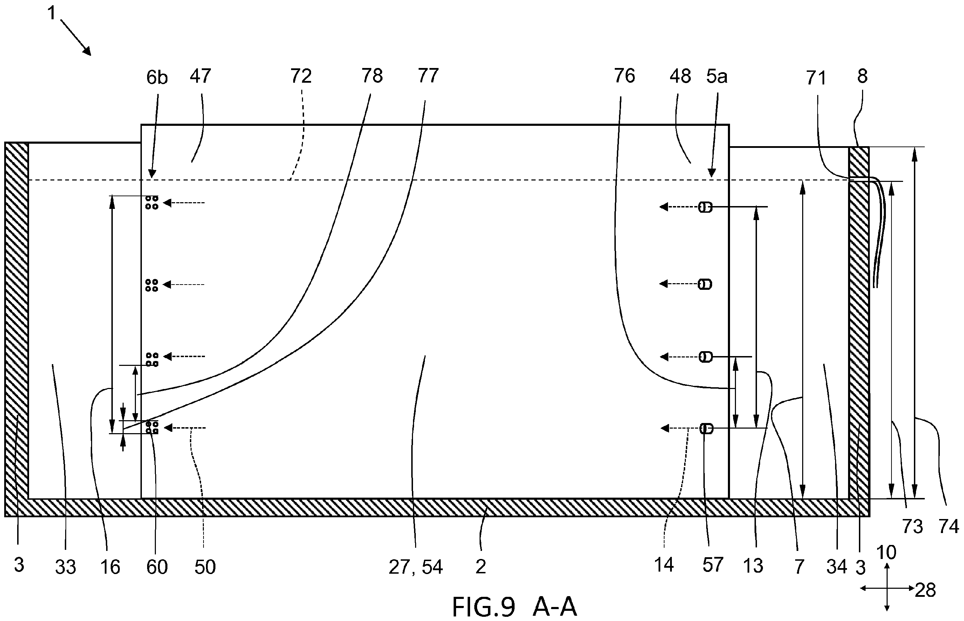

Figure 9 shows still a further example embodiment of the tank 1 according to the disclosure. All aspects of the tank 1 of the embodiment of figure 9 is identical to the embodiment of figure 6, except that the inlet and outlet openings of the active flow control system have a different layout.

Specifically, the first water inlet arrangement 5a has four individual inlet openings 57, each of which is formed in an individual inlet nozzle as described with reference to 9a-9b. The four individual inlet openings 57 are arranged aligned in a vertical direction 10 with a vertical distance 76 between each neighbouring inlet openings 57.

The four individual inlet openings 57 jointly define an outer border of a water inlet region, which extends in a vertical direction over more than 50%, specifically 65%, and more specifically 80% of the maximal depth 7. In fact, the water inlet region defined jointly by the four inlet openings 57 in figure 9 extends in a vertical direction over a length 13 of about 70% of the maximal depth 7.

All four individual inlet openings 57 define the water inlet region because the maximal vertical distance 76 between neighbouring inlet openings 57 is smaller than 40% of the maximal depth 7 and the horizontal distance between neighbouring inlet openings 57 of the first water inlet arrangement 5a is smaller than 75% of a maximal interior horizontal length 46 of the tank 1.

The second water outlet arrangement 6b has four individual sets of circular outlet openings 60, each set of outlet openings 60 extending in the vertical direction 10 over a certain vertical length 77. Moreover, the four individual sets of outlet openings 60 are arranged aligned in a vertical direction 10 with a maximal vertical distance 78 between neighbouring set of outlet openings 60.

The four individual sets of outlet openings 60 jointly define an outer border of a water outlet region, which extends in a vertical direction over more than 50%, specifically 65%, and more specifically 80% of the maximal depth 7. In fact, the water outlet region defined by the four sets of outlet openings 60 in figure 9 extends in a vertical direction over a length 16 of about 70% of the maximal depth 7.

In the embodiment of figure 9, all four individual sets of outlet openings 60 define the water outlet region because the maximal vertical distance 78 between neighbouring outlet openings 60 is smaller than 40% of the maximal depth 7 and the horizontal distance between neighbouring outlet openings 60 of the second water outlet arrangement 6b is smaller than 75% of a maximal interior horizontal length 46 of the tank 1.

One of the most relevant aspects of the first water inlet arrangement for facilitating the improved performance in terms of increased homogenous and laminar flow throughout the entire tank is the relative large vertical distance over which the first water inlet arrangement is configured to inject water, namely over more than half of a maximal depth.

However, a relatively high homogenous and laminar flow within the tank enables increased horizontal distance between various inlet openings of the first water inlet arrangement without necessarily resulting in increased vertical flow component of the water.

This is the reason why the first water inlet arrangement 5a under certain conditions may be more spread out in a horizontal direction of the tank 1 while still providing satisfactory performance in terms of improved homogenous and laminar flow throughout the entire tank.

The horizontal distance between various inlet openings of the first water inlet arrangement may however also not become too large, because thereby the performance in terms of homogenous and laminar flow throughout the entire tank would fall.

One approach for quantifying the level of horizontal spread out of inlet openings of the first water inlet arrangement and for defining limits that are deemed to provide satisfactory performance in terms of improved homogenous and laminar flow throughout the entire tank is to set maximal distance between neighbouring inlet openings of the first water inlet arrangement in a horizontal direction.

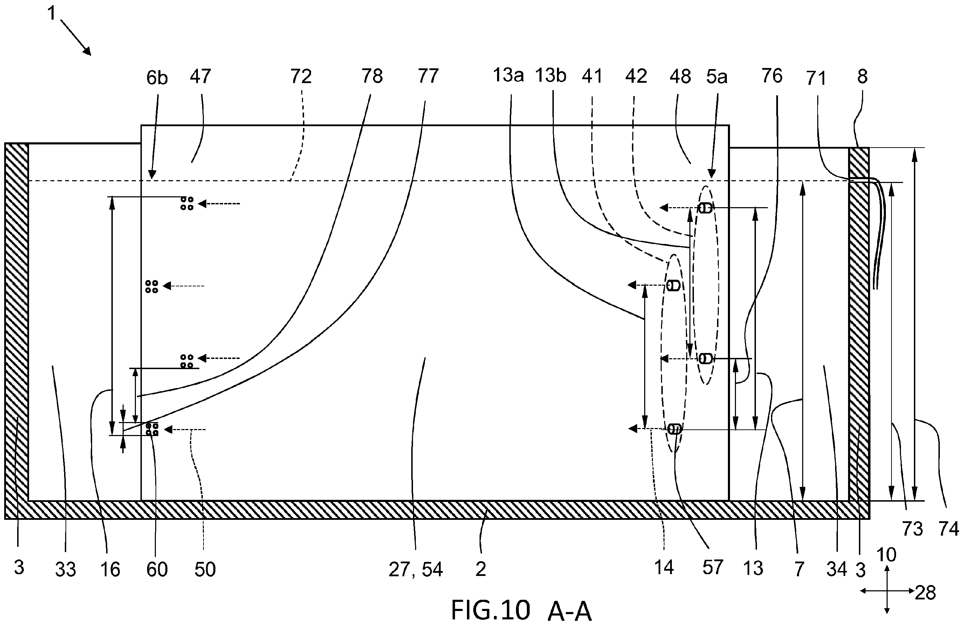

For example, as shown in figure 10, the active flow control system comprises a first water inlet arrangement 5a that includes a first part 41 and a second part 42, wherein the first and second parts 41, 42 are located spaced apart from each other in the longitudinal direction 28, wherein each of the first and second parts 41, 42 has one or more inlet openings 57 for injecting water into the tank 1.

Moreover, as before, the first water inlet arrangement 5a is configured for injecting water over more than 50% of a maximal depth 7 stretching from an interior surface of the bottom 2 to the maximal water fill level. In the example embodiment of figure 10, the first water inlet arrangement 5a is configured for injecting water over a vertical length 13 that is composed of two vertical sections, namely a first vertical section 13a of the first part 41 of the first water inlet arrangement 5a, and a section vertical section 13b of the second part 42 of the first water inlet arrangement 5a.

Hence, the accumulated length 13 of the first and section vertical sections 13a, 13b is larger than 50% of a maximal depth 7 stretching from an interior surface of the bottom 2 to the maximal water fill level.

The cross-sectional shape of the tank 1 as seen in the longitudinal direction, in the region between the first and second curved end sections 33, 34, may vary according to the specific circumstances and requirements of each individual installation and implementation of the tank 1. For example, said cross-sectional shape may have a substantially rectangular shape, as schematically illustrated in figure 1a and 2a.

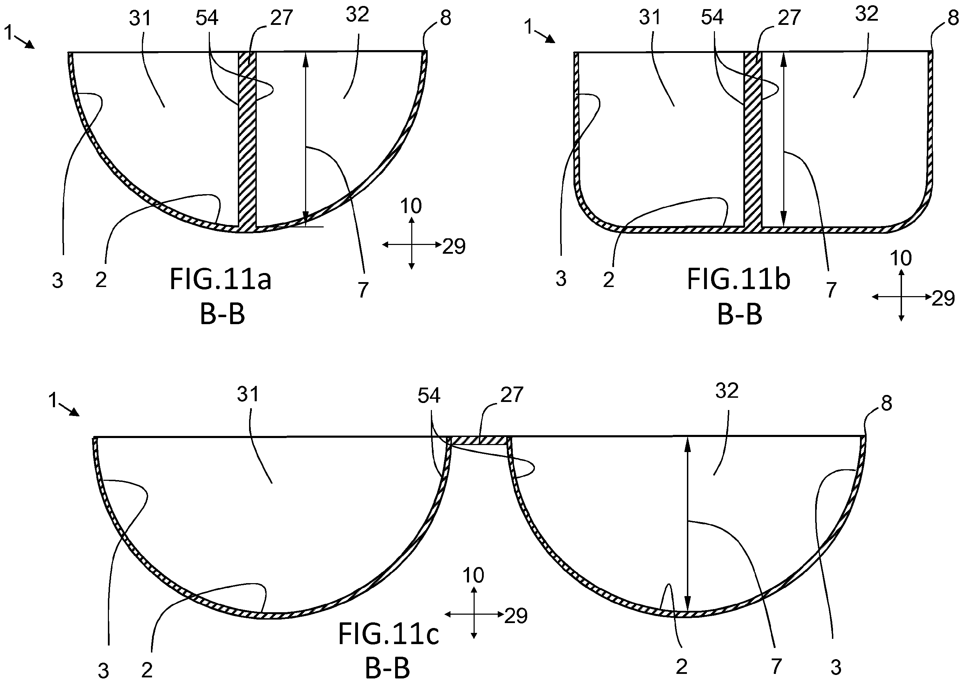

Other example alternative cross-sectional shapes of the tank 1 as seen in the longitudinal direction 28 are showed in figure 11a - 11c, which correspond to cut B-B in figure 3.

Figure 11a shows an example embodiment of the tank having a single circular arc-shaped surface defining the bottom 2 and side walls 3 of the tank 1, and with the partition 27 located in the centre of said surface. Consequently, there is no clear indication of transition point between bottom 2 and side wall 3. In such situations the portion of the circular arc-shaped surface having an inclination less than for example 25 degrees, specifically less than 10 degrees, relative to the transverse direction 29, be deemed representing the bottom 2, and the remaining portion be deemed representing the side wall 3.

Each of the first and second parallel longitudinal channel sections 31, 32 is thus defined by an exterior side wall 3 having circular arc-shaped form, a bottom 2, and an interior planar and vertical side wall surface 54 of the partition 27.

The maximal depth 7 stretching from an interior surface of the bottom 2 to the maximal water fill level is indicated in figure 11a, based on an embodiment where the maximal water fill level of the tank 1 is represented by an overflow level of the tank 1, corresponding to when the water level at which water begins to flow over the upper edge 8 of the side wall 3. Moreover, the maximal depth 7 is always measured at the position of the deepest location of the bottom 2.

Figure 11b shows a schematic view of an alternative example embodiment of the tank 1 having a more rectangular-shaped surface defining the bottom 2 and side walls 3 of the tank 1, and with the partition 27 located in the centre of said surface. More in detail, the bottom 2 of the tank 1 may be substantially planar and extend in a horizontal plane, and the side wall 3 of the tank 1 may be substantially planar and extend in a substantially vertical plane.

Moreover, the transition between the bottom 2 and side wall 3 may be curved to define a smooth transition for enabling simplified cleaning of the tank 1. Alternatively, the transition between the bottom 2 and side wall 3 may be planar and inclined with respect to a horizontal plane, for example in the range of 30 - 60 degrees.

Each of the first and second parallel longitudinal channel sections 31, 32 is thus defined by an exterior planar and vertical side wall 3, a transition between the side wall 3 and the bottom 2, the planar and horizontal bottom, and the interior planar and vertical side wall surface 54 of the partition 27.

Figure 11c shows a schematic view of still a further alternative example embodiment of the tank 1. In this example embodiment each of the first and second parallel longitudinal channel sections 31, 32 are formed by a separate and individual half-pipe section that are interconnected along their mutually facing longitudinal sides.

Each of the first and second parallel longitudinal channel sections 31, 32 is thus defined by an exterior arc-shaped vertical side wall 3, the bottom 2, and the interior arc-shaped side wall surface 54 of the partition 27.

The surface of the side wall 3 and/or side wall surface 54 of the partition 27 of the embodiments of fig. 11a and 11c may of course vary from the circular arc-shaped form to other curved shapes.

As disclosed above with reference to figures 6 to 9 , both the water inlet region and water outlet region have essentially the same underlying definition, namely a region having an outer border defined only by those inlet/outlet openings of the first water inlet/out arrangement forming a cluster having a vertical distance between neighbouring inlet/outlet openings of the first water inlet/outlet arrangement smaller than 3 metres or 40% of the maximal depth, specifically smaller than 1.5 metres or 25% of the maximal depth, and more specifically smaller than 0.5 metre or 10% of the maximal depth, and a horizontal distance between neighbouring inlet/outlet openings of the first water inlet/outlet arrangement smaller than 10 metres or 75% of a maximal interior horizontal length of the tank, specifically smaller than 5 metres or 40% of a maximal interior horizontal length of the tank, and more specifically smaller than 2 metres or 20% of a maximal interior horizontal length of the tank 1.

In other words, the water inlet or outlet region is defined by a cluster of inlet or outlet openings, wherein any inlet or outlet openings located spaced apart from the nearest inlet or outlet opening of the cluster with a distance larger than or equal to 3 metres or 40% of the maximal depth in the vertical direction, or larger than or equal to 10 metres or 75% of a maximal interior horizontal length of the tank in the horizontal direction, is/are deemed not being part of said water inlet region or water outlet region.

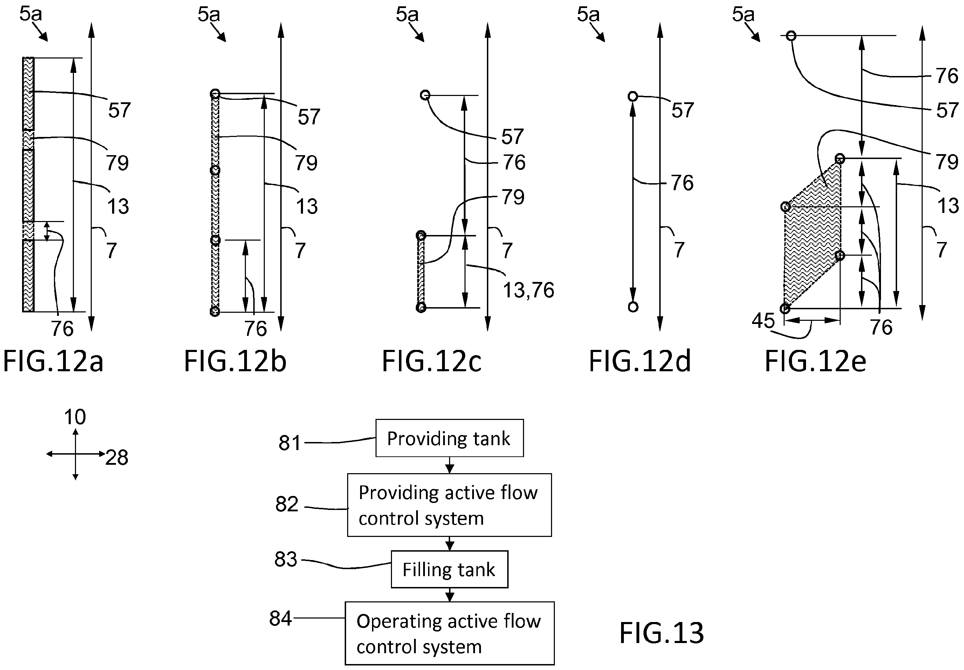

This concept will be further clarified below with reference to figure 12a-12h, which show first water inlet arrangements 5a with various example embodiments of layouts of multiple water inlet openings 57 and associated resulting water inlet regions 79. This description applies also to water outlet region correspondingly.

Figure 12a shows an example embodiment of the first water inlet arrangement 5a having a cluster of three individual elongated vertically oriented water inlet openings 57 aligned in the vertical direction 10 and with neighbouring inlet openings 57 separated from each with a vertical distance 76. Since the vertical distance between neighbouring inlet openings 57 of the first water inlet arrangement 5a is smaller than 3 metres or 40% of the maximal depth 7, the outer border of the resulting water inlet region 79, which is indicated by a hatched area in figure 12a, is defined by all three inlet openings 57 of said the first water inlet arrangement 5a. Moreover, the length 13 of the water inlet region 79 in the vertical direction 10 is larger than 50% of the maximal depth 7, such that the first water inlet arrangement 5a is configured for injecting water over more than half of the maximal depth 7.

Figure 12b shows an example embodiment of the first water inlet arrangement 5a having a cluster of four individual water inlet openings 57 arranged aligned in the vertical direction 10 and with neighbouring inlet openings 57 separated from each with a vertical distance 76. Since the vertical distance between neighbouring inlet openings 57 of the first water inlet arrangement 5a is smaller than 3 metres or 40% of the maximal depth 7, the outer border of the resulting water inlet region 79, which is indicated by a hatched area in figure 12b, is defined by all four inlet openings 57 of said the first water inlet arrangement 5a. Moreover, the length 13 of the water inlet region 79 in the vertical direction 10 is larger than 50% of the maximal depth 7, such that the first water inlet arrangement 5a is configured for injecting water over more than half of the maximal depth 7.

Figure 12c shows an example embodiment of the first water inlet arrangement 5a having three individual water inlet openings 57 arranged aligned in the vertical direction 10, wherein the two lower neighbouring inlet openings 57 are separated from each with a vertical distance 76 that is smaller than 3 metres or 40% of the maximal depth 7, and wherein the two upper neighbouring inlet openings 57 are separated from each other with a vertical distance 76 that is larger than 3 metres or 40% of the maximal depth 7, such that the outer border of the resulting water inlet region 79, which is indicated by a hatched area in figure 12b, is defined only by the two lower inlet openings 57 of said the first water inlet arrangement 5a. In other words, the uppermost water inlet opening 57 is located too far away from the cluster of inlet openings formed by the two lower inlet openings 57. Consequently, the length 13 of the water inlet region 79 in the vertical direction 10 is smaller than 50% of the maximal depth 7, such that the first water inlet arrangement 5a is not configured for injecting water over more than half of the maximal depth 7.

Figure 12d shows an example embodiment of the first water inlet arrangement 5a having two individual water inlet openings 57 arranged aligned in the vertical direction 10 and separated from each other with a vertical distance 76 that is larger than 3 metres or 40% of the maximal depth 7, such that the outer border of the resulting water inlet region 79 corresponds merely to the area of one inlet opening 57 of said the first water inlet arrangement 5a. In other words, the two water inlet openings 57 are located too far away from each other to form a cluster of inlet openings. Consequently, the length of the water inlet region 79 in the vertical direction 10 is smaller than 50% of the maximal depth 7, such that the first water inlet arrangement 5a is not configured for injecting water over more than half of the maximal depth 7.

Figure 12e shows an example embodiment of the first water inlet arrangement 5a having five individual water inlet openings 57, of which three inlet openings 57 are arranged aligned in the vertical direction 10, and two inlet openings 57 are arranged aligned in the vertical direction 10 but offset from said three inlet openings in both the vertical and horizontal direction 10, 28. The four lowest inlet openings 57 are separated from each other with a vertical distance 76 that is smaller than 3 metres or 40% of the maximal depth 7 and with a horizontal distance 45 that is smaller than 10 metres or 75% of a maximal interior horizontal length of the tank. However, the uppermost inlet opening 57 is separated from its neighbouring inlet opening 57 with a vertical distance 76 that is larger than 3 metres or 40% of the maximal depth 7, such that the outer border of the resulting water inlet region 79, which is indicated by a hatched area in figure 12e, is defined only by the four lower inlet openings 57 of said the first water inlet arrangement 5a. In other words, the uppermost water inlet opening 57 is located too far away from the cluster of inlet openings formed by the four lower inlet openings 57. Moreover, the length 13 of the water inlet region 79 in the vertical direction 10 is larger than 50% of the maximal depth 7, such that the first water inlet arrangement 5a is configured for injecting water over more than half of the maximal depth 7.

The tank illustrated in the example embodiments of figures 6 to 9 is illustrated having a certain water fill level 72. In the description above the specific advantageous design of first water inlet arrangement underlying the disclosure, i.e. that the first water inlet arrangement 5a is configured for injecting water over more than half of a maximal depth 7 stretching from an interior surface of the bottom 2 to the maximal water fill level, has been defined with reference to said maximal depth 7, which depends on the maximal water fill level. However, the tank according to the disclosure, and specifically the advantageous design of first water inlet arrangement 5a underlying the disclosure, may alternatively be defined with reference to a current water depth, which stretches from an interior surface of the bottom 2 to the water fill level 72. This definition may in certain tank layouts be deemed providing a more accurate, or at least an alternative definition of the tank according to the disclosure, because the underlying technical features contributing to an improved homogenous and laminar flow throughout the entire tank 1 is injecting water over a significant span of the actual water fill level of the tank 1.

Consequently, with reference to for example the example embodiment of the tank according to figure 10, there is shown a farming tank for cultivating living fish, wherein the tank 1 comprises a bottom 2 and a side wall 3 defining an internal volume 4 for holding water, water within the internal volume 4 filled up to a water fill level 72, and an active flow control system for generating a circulating flow of water within the tank 1, wherein the tank 1 has an elongated stadium form with an elongated partition 27 located centrally along a longitudinal direction 28 of the tank 1, as seen from above, such that a continuous tank channel 30 with first and second parallel longitudinal channel sections 31, 32 and first and second curved end sections 33, 34 is provided within the tank 1, wherein the active flow control system has a first and a second water inlet arrangement 5a, 5b for injecting water into the tank 1 and a first water outlet arrangement 6a for removing water from the tank 1, wherein the first water inlet arrangement 5a is located at a first longitudinal end region 47 of the partition 27 and configured for injecting water into the first longitudinal channel section 31, wherein the second water inlet arrangement 5b is located at a second longitudinal end region 48 of the partition 27 and configured for injecting water into the second longitudinal channel section 32, and wherein each of the first and second water inlet arrangements 5a, 5b is configured for injecting water over more than 50%, specifically over more than 70%, and more specifically over more than 80%, of a water depth stretching from an interior surface of the bottom to the water fill level 72.

In fact, in the example embodiment of figure 6, the first water inlet arrangement 5a is configured for injecting water over about 90% of said water depth.

This specific arrangement of the active flow control system contributes to an improved homogenous and laminar flow throughout the entire tank.

Moreover, the first water outlet arrangement 6a may be configured for sucking water over more than 60%, specifically over more than 70%, and more specifically over more than 80% of the water depth. This specific arrangement of the active flow control system further contributes to an improved homogenous and laminar flow throughout the entire tank. In fact, in the example embodiment of figure 6, the second water outlet arrangement 6b is configured for injecting water over about 90% of said water depth.

The disclosure also relates to a method for generating a circulating flow of water in a fish farming tank for cultivating living fish. The method will hereinafter be briefly described with reference to figure 13, which illustrates the basic steps of the method.

A first step 81 involves providing a tank 1 having an elongated stadium form with an elongated partition 27 located centrally along a longitudinal direction 28 of the tank 1, as seen from above, defining a continuous tank channel 30 with first and second parallel longitudinal channel sections 31, 32 and first and second curved end sections 33, 34 within the tank 1.

A second step 82 involves providing an active flow control system having first and second water inlet arrangements 5a, 5b for injecting water into the tank 1 and first water outlet arrangement 6a for removing water from the tank 1, wherein the first water inlet arrangement 5a is located at a first longitudinal end region 47 of the partition 27 and wherein the second water inlet arrangement 5b is located at a second longitudinal end region 48 of the partition 27.

A third step 83 involves filling the tank 1 with water up to a water fill level 72.

Finally, a fourth step 84 involves operating the active flow control system for generating a circulating flow of water within the continuous tank channel 30 involving injecting water into the first longitudinal channel section 31 by means of the first water inlet arrangements 5a and injecting water into the second longitudinal channel section 32 by means of the second water inlet arrangement 5b.

According to a further embodiment of the method described above, the step of operating the active flow control system for generating the circulating flow of water within the continuous tank channel 30 may involve injecting water into each of the first and second longitudinal channel sections 31, 32 over more than 50%, specifically over more than 70%, and more specifically over more than 80%, of a water depth stretching from an interior surface of a bottom of the tank to the water fill level 72, by means of the first and second water inlet arrangements 5a, 5b, respectively. Thereby, further improvements in terms of homogenous and laminar circulating flow within the tank 1 may be accomplished.

Although the disclosure has been described in relation to specific combinations of components, it should be readily appreciated that the components may be combined in other configurations as well which is clear for the skilled person when studying the present application. Thus, the above description of the example embodiments of the present disclosure and the accompanying drawings are to be regarded as a non-limiting example of the disclosure and the scope of protection is defined by the appended claims. Any reference sign in the claims should not be construed as limiting the scope.

Details of the tank described with reference to figure 1 is generally also applicable to the tank described with reference to figures 2-13, and this applies to all figures, unless clearly inconsistent combinations occur.

A maximal interior longitudinal length 46 of the tank 1 may be in the range of 5 - 150 metres, specifically in the range of 20 - 120 metres. A maximal interior transverse length 63 of the tank 1 may be in the range of 3 - 40 metres, specifically in the range of 5 - 20 metres. A maximal depth 7 of the tank 1 may be in the range of 2 - 30 metres, specifically in the range of 5 - 20 metres. The tank 1 may be located in land or floating in water.

The use of the word "a" or "an" in the specification may mean "one," but it is also consistent with the meaning of "one or more" or "at least one." The term "about" means, in general, the stated value plus or minus 10%, or more specifically plus or minus 5%. The use of the term "or" in the claims is used to mean "and/or" unless explicitly indicated to refer to alternatives only.

The terms "comprise", "comprises" "comprising", "have", "has", "having", "include", "includes", "including" are open-ended linking verbs. As a result, a method or device that "comprises", "has" or "includes" for example one or more steps or elements, possesses those one or more steps or elements, but is not limited to possessing only those one or more elements.

## Claims

1. Fish farming tank for cultivating living fish, wherein the tank (1) comprises an active flow control system for generating a circulating flow of water within the tank (1),
wherein the tank (1) has an elongated stadium shape with an elongated partition (27) located centrally along a longitudinal direction (28) of the tank (1), as seen from above, such that a continuous tank channel (30) with first and second parallel longitudinal channel sections (31, 32) and first and second curved end sections (33, 34) is provided within the tank (1),
wherein the active flow control system has a first and a second water inlet arrangement (5a, 5b) for injecting water into the tank (1) and a first water outlet arrangement (6a) for removing water from the tank (1),
wherein the first water inlet arrangement (5a) is located at a first longitudinal end region (47) of the partition (27) and configured for injecting water into the first longitudinal channel section (31), and
wherein the second water inlet arrangement (5b) is located at a second longitudinal end region (48) of the partition (27) and configured for injecting water into the second longitudinal channel section (32).

2. Fish farming tank according to claim 1, wherein the tank (1) comprises a bottom (2) and a side wall (3) defining an internal volume (4) for holding water up to a maximal water fill level, and wherein each of the first and second water inlet arrangements (5a, 5b) is configured for injecting water over more than 50%, specifically over more than 70%, and more specifically over more than 80%, of a maximal depth (7) stretching from an interior surface of the bottom (2) to the maximal water fill level.

3. Fish farming tank according to any of the preceding claims, wherein each of the first and second water inlet arrangements (5a, 5b) has one elongated inlet opening (157) or a plurality of inlet openings (57) for injecting water into the tank (1).

4. Fish farming tank according to claim 3, wherein the one or plurality of inlet openings (157, 57) of each of the first and second water inlet arrangements (5a, 5b) define an outer border of a water inlet region (79), and wherein the water inlet region (79) extends in a vertical direction (10) over more than 50%, specifically 65%, and more specifically 80% of the maximal depth (7).

5. Fish farming tank according to claim 4, wherein said outer border of said water inlet region (79) is defined only by those inlet openings (57) of the first and second water inlet arrangements (5a, 5b), respectively, that forms a cluster having
a vertical distance (76) between neighbouring inlet openings (57) of the first or second water inlet arrangements (5a, 5b) smaller than 3 metres or 40% of the maximal depth (7), specifically smaller than 1.5 metres or 25% of the maximal depth (7), and more specifically smaller than 0.5 metre or 10% of the maximal depth (7), and
a horizontal distance (45) between neighbouring inlet openings (57) of the first or second water inlet arrangements (5a, 5b) smaller than 10 metres or 75% of a maximal interior horizontal length (46) of the tank, specifically smaller than 5 metres or 40% of a maximal interior horizontal length (46) of the tank, and more specifically smaller than 2 metres or 20% of a maximal interior horizontal length (46) of the tank.

6. Fish farming tank according to any of the preceding claims 3 to 5, wherein the active flow control system further comprises a pump (17) having a pump outlet (20) connected to the first and/or second water inlet arrangement (5a, 5b) via a water inlet pipe (21) for supplying pressurized water to the first and/or second water inlet arrangement (5a, 5b), and wherein the active flow control system is configured such that a flow rate of the water injected at any two locations of the one elongated inlet opening (157), or at any two inlet openings (57) of the plurality of inlet openings (57), of the first and/or second water inlet arrangement (5a, 5b) do not differ more than 40% , specifically 30%, and more specifically 20%.

7. Fish farming tank according to any of the preceding claims 3 to 6, wherein the one or plurality of inlet openings (157, 57) of each of the first and second water inlet arrangements (5a, 5b) extends or are arranged primarily in a vertical direction (10).

8. Fish farming tank according to any of the preceding claims, wherein each of the first and second water inlet arrangements (5a,5b) is configured for injecting water in a direction at a first angle (52) of 0 - 45 degrees, specifically 5 - 35 degrees, and more specifically 10 - 30 degrees to the longitudinal direction (28) of the tank (1).

9. Fish farming tank according to any of the preceding claims, wherein the first water outlet arrangement (6a) is configured for sucking water over more than 50%, specifically over more than 70%, and more specifically over more than 80%, of the maximal depth (7).

10. Fish farming tank according to any of the preceding claims, wherein the elongated partition (27) has curved side wall surfaces (53) at the first and second longitudinal end regions (27, 28) connected by straight intermediate side wall surfaces (54), as seen from above, and wherein each of the first and second water inlet arrangements (5a,5b) is located within 10 metres or 20% of a maximal interior longitudinal length (46) of the tank (1), specifically within 5 metres or 10% of a maximal interior longitudinal length (46) of the tank (1), and more specifically within 1 metre or 5% of a maximal interior longitudinal length (46) of the tank (1), from a transition point (51) between a curved side wall surface (53) and a straight intermediate side wall surface (54).

11. Fish farming tank according to any of the preceding claims, wherein the active flow control system further comprises a second water outlet arrangement (6b) for sucking water from the tank (1), wherein the first water outlet arrangement (6a) is located at a first longitudinal end region (47) of the partition (27), and wherein the second water outlet arrangement (6b) is located at a second longitudinal end region (48) of the partition (27).

12. Fish farming tank according to claim 11, wherein each of the first and second water outlet arrangements (6a, 6b) has one elongated outlet opening (15) or a plurality of outlet openings (15) for sucking water from the tank (1), and wherein the one or plurality of outlet openings (15) of the first water outlet arrangement (6a) is located on the curved side wall surface (53) at the first longitudinal end region (47) of the partition (27), and wherein the one or plurality of outlet openings (15) of the second water outlet arrangement (6b) is located on the curved side wall surface (53) at the second longitudinal end region (28) of the partition (27).

13. Fish farming tank according to claim 12, wherein the plurality of outlet openings (15) of each of the first and second water outlet arrangements (6a,6b) correspond to perforations or holes in the curved side wall surfaces (53) at the first and second longitudinal end regions (47, 48) of the partition (27).

14. Fish farming tank for cultivating living fish, wherein the tank (1) comprises:
a bottom (2) and a side wall (3) defining an internal volume (4) for holding water,
water within the internal volume (4) filled up to a water fill level (72), and
an active flow control system for generating a circulating flow of water within the tank (1),
wherein the tank (1) has an elongated stadium form with an elongated partition (27) located centrally along a longitudinal direction (28) of the tank (1), as seen from above, such that a continuous tank channel (30) with first and second parallel longitudinal channel sections (31, 32) and first and second curved end sections (33, 34) is provided within the tank (1),
wherein the active flow control system has a first and a second water inlet arrangement (5a, 5b) for injecting water into the tank (1) and a first water outlet arrangement (6a) for removing water from the tank (1),
wherein the first water inlet arrangement (5a) is located at a first longitudinal end region (47) of the partition (27) and configured for injecting water into the first longitudinal channel section (31),
wherein the second water inlet arrangement (5b) is located at a second longitudinal end region (48) of the partition (27) and configured for injecting water into the second longitudinal channel section (32), and
wherein each of the first and second water inlet arrangements (5a, 5b) is configured for injecting water over more than 50%, specifically over more than 70%, and more specifically over more than 80%, of a water depth stretching from an interior surface of the bottom to the water fill level (72).

15. Method for generating a circulating flow of water in a fish farming tank for cultivating living fish, the method comprising:
providing a tank (1) having an elongated stadium form with an elongated partition (27) located centrally along a longitudinal direction (28) of the tank (1), as seen from above, defining a continuous tank channel (30) with first and second parallel longitudinal channel sections (31, 32) and first and second curved end sections (33, 34) within the tank (1),
providing an active flow control system having first and second water inlet arrangements (5a, 5b) for injecting water into the tank (1) and first water outlet arrangement (6a) for removing water from the tank (1), wherein the first water inlet arrangement (5a) is located at a first longitudinal end region (47) of the partition (27) and wherein the second water inlet arrangement (5b) is located at a second longitudinal end region (48) of the partition (27),
filling the tank (1) with water up to a water fill level (72),
operating the active flow control system for generating a circulating flow of water within the continuous tank channel (30) involving injecting water into the first longitudinal channel section (31) by means of the first water inlet arrangements (5a) and injecting water into the second longitudinal channel section (32) by means of the second water inlet arrangement (5b).

16. Method according to claim 15, wherein the step of operating the active flow control system for generating the circulating flow of water within the continuous tank channel (30) involves injecting water into each of the first and second longitudinal channel sections (31, 32) over more than 50%, specifically over more than 70%, and more specifically over more than 80%, of a water depth stretching from an interior surface of a bottom of the tank to the water fill level (72), by means of the first and second water inlet arrangements (5a, 5b), respectively.
